# EUROPÄISCHE PATENTSCHRIFT

(11) **EP 1 730 500 B1**
(45) Veröffentlichungstag und Bekanntmachung des Hinweises auf die Patenterteilung: **11.07.2007**
(21) Anmeldenummer: 05731852.9
(22) Anmeldetag: 15.03.2005
(51) Int. Cl.: G01N 21/88, B41F 33/00, H04N 1/40, G01N 21/86

(54) **OPTISCHE SYSTEME ZUR ERZEUGUNG EINES BELEUCHTUNGSSTREIFENS**
OPTICAL SYSTEM FOR CREATING AN ILLUMINATING STRIP
SYSTEMES OPTIQUES POUR LA PRODUCTION D'UNE BANDE D'ECLAIRAGE

(30) Priorität: 23.03.2004 DE 102004014541
(43) Veröffentlichungstag der Anmeldung: 13.12.2006
(73) Patentinhaber: Koenig & Bauer AG, 97080 Würzburg (DE)
(72) Erfinder: STÖBER, Bernd, Rüdiger, 33378 Rheda-Wiedenbrück (DE)
(86) Internationale Anmeldenummer: PCT/EP2005/051155
(87) Internationale Veröffentlichungsnummer: WO 2005/093395

(56) Entgegenhaltungen:
- EP-A- 0 477 536
- EP-A- 0 662 609
- WO-A-97/16024
- WO-A-98/52088

## Beschreibung

Die Erfindung betrifft optische Systeme zur Erzeugung eines Beleuchtungsstreifens gemäß dem Oberbegriff des Anspruchs 1, 8 oder 98.

Die Anwendung besteht vorrangig in der Bildaufnahme von maschinell verarbeitetem Material zur industriellen Bildverarbeitung, z. B. von im Wertdruck verarbeitetem Bedruckstoff, wobei das optische System in oder an einer Druckmaschine, vorzugsweise in oder an einer Rotationsdruckmaschine, insbesondere in oder an einer in einem Offsetdruckverfahren, in einem Stahlstichverfahren, in einem Siebdruckverfahren oder in einem Heißprägeverfahren druckenden Druckmaschine, Verwendung findet. Alternativ oder zusätzlich zu einer Anordnung in oder an einer Druckmaschine kann das optische System auch in oder an einer ein Druckerzeugnis weiterverarbeitenden Maschine angeordnet sein. Die Bildaufnahme erfolgt zu dem Zweck einer zumindest ausschnittsweisen, vorzugsweise vollständigen Bilddarstellung des sich bewegenden Materials mit oder ohne einer Vermessung zuvor festgelegter Merkmale dieses Materials, um dieses Material hinsichtlich der Qualität eines zuvor in der Maschine ausgeführten Verarbeitungsschrittes zu beurteilen. Gattungsgemäße optische Systeme werden z. B. in einem Inline-Inspektionssystem eingesetzt und bilden damit einen Bestandteil eines Inline-Inspektionssystems.

Durch die EP 0 477 536 A2 ist ein optisches System zur Erzeugung eines Beleuchtungsstreifens auf einer Oberfläche eines Materials bekannt, wobei eine Beleuchtungseinrichtung mit mehreren Lichtquellen in einem Abstand von der Oberfläche des Materials angeordnet ist, wobei die Beleuchtungseinrichtung mit ihren Licht emittierenden Lichtquellen auf der Oberfläche des relativ zur Beleuchtungseinrichtung bewegten Materials den Beleuchtungsstreifen erzeugt, wobei die Beleuchtungseinrichtung einen das von den Lichtquellen emittierte Licht auf den Beleuchtungsstreifen bündelnden Spiegel und an ihrer der Oberfläche des Materials zugewandten Lichtaustrittsseite einen Streukörper aufweist, wobei die Beleuchtungseinrichtung mindestens ein den Streukörper und den Spiegel aufweisendes Reflektormodul aufweist, wobei die Lichtquellen ihr Licht in das Reflektormodul einspeisen.

Durch die DE 35 27 300 C2 ist eine Bildlesevorrichtung bekannt, wobei eine Beleuchtungseinrichtung mit mehreren Gruppen von Lichtquellen vorgesehen ist, wobei die Gruppen von Lichtquellen Licht zur Erzeugung eines Beleuchtungsstreifens emittieren, wobei eine Steuereinrichtung die Gruppen von Lichtquellen gepulst betreibt, wobei reihenförmig angeordnete Fotosensoren von der Oberfläche des Materials remittiertes Licht erfassen, wobei die Fotosensoren eine Zeilenkamera bilden, wobei den Gruppen von Lichtquellen eine von der Steuereinrichtung gesteuerte Stromquelle zugeordnet ist, wobei eine Einschaltdauer der Lichtquellen mit einer Belichtungsdauer der Zeilenkamera synchronisiert ist.

Durch die DE 41 02122 A1 ist ein zur Anwendung in der Druckindustrie geeignetes Verfahren zur Untersuchung von bahnförmigem, durchscheinendem Material, insbesondere einer Papierbahn, bekannt, bei dem z. B. mit Leuchtdioden oder Laserdioden verwirklichte Blitzlichtlampen durch eine Papierbahn hindurchstrahlen, bei dem durch die Papierbahn strahlendes Licht zur Erzeugung eines Videosignals auf eine CCD-Matrix einer Kamera fällt, wobei aus der Beleuchtungseinrichtung in Richtung der Papierbahn austretendes Licht durch eine Milchglas-Diffusorscheibe strahlt.

Durch die DE 43 21 177 A1 ist eine Druckmaschine mit einer Inline-Bildinspektioneinrichtung zur Inspektion eines in der Druckmaschine erstellten Druckproduktes bekannt, wobei eine Bilddaten vom Druckprodukt an eine Recheneinrichtung liefernde Bilderfassungseinrichtung vorgesehen ist, wobei die Bilderfassungseinrichtung aus einem Messmodul oder mehreren jeweils einen definierten Bildbereich des Druckproduktes abtastenden Messmodulen und aus zumindest einer zugeordneten, die Bilddaten in elektrischer Form bereitstellenden und vorzugsweise von den Messmodulen räumlich getrennten Empfangseinrichtung besteht, wobei die Messmodule und die mindestens eine Empfangseinrichtung mittels mindestens eines Bildleiters miteinander verbunden sind, wobei der Bilderfassungseinrichtung eine aus Präzisionshalogenlampen bestehende Beleuchtungseinrichtung zugeordnet ist, wobei ein Blasluftrohr mit Öffnungen in Richtung des Druckproduktes bei seiner Blasluftbeaufschlagung das Druckprodukt in einem definierten Abstand zur Beleuchtungseinrichtung hält und gleichzeitig mit der Blasluft die Beleuchtungseinrichtung kühlt.

Durch die DE 100 61 070 A1 ist eine Beleuchtungseinrichtung für eine optische Inspektionseinrichtung zur Untersuchung von Oberflächen bekannt, wobei mehrere vorzugsweise gleich lange, elektrisch miteinander verschaltete Trägerplatinen mit jeweils mehreren Reihen von Leuchtdioden linienartig in einem gemeinsamen, entsprechend der mit einer konstanten Lichtabstrahlung abzutastenden Objektfläche längbaren, steifen Montageprofil eingeschoben sind, wobei zwischen den Trägerplatinen und dem Montageprofil über eine mechanische Verbindung eine Wärmekopplung zur Kühlung der Leuchtdioden und ihrer Ansteuerelektronik erfolgt.

Durch die DE 202 13 431 U1 ist eine Einrichtung zur Qualitätskontrolle an Drucksachen bekannt, die gleichfalls ein in einer Druckmaschine angeordnetes Inline-Bildinspektionssystem bildet, wobei eine als eine Leuchtstoffröhre ausgebildete Beleuchtungseinrichtung und eine als eine Zeilenkamera ausgebildete Bildaufnahmeeinrichtung zum Einsatz gebracht werden.

Durch die DE 203 03 574 U1 ist ein Inline-Bildinspektionssystem für eine Druckmaschine, insbesondere einer Bogenoffsetdruckmaschine, bekannt, wobei eine als eine Leuchtstofflampe ausgebildete Beleuchtungseinrichtung unterhalb eines Fußtrittes nahe an einem einen Bedruckstoff führenden Gegendruckzylinder und eine als eine Zeilen kamera ausgebildete Bildaufnahmeeinrichtung in einem im Vergleich zur Beleuchtungseinrichtung weiteren Abstand vom Gegendruckzylinder in einer Zuordnung zum letzten Druckwerk der Druckmaschine angeordnet ist.

Durch die EP 0 762174 A2 ist eine Vorrichtung zur linienförmigen Beleuchtung von Blattgut, wie z. B. Banknoten oder Wertpapieren, bekannt, wobei ein zylindrischer Spiegel mit zwei Spiegelsegmenten vorgesehen ist, wobei die Spiegelsegmente eine elliptische, zwei Fokuslinien aufweisende Grundfläche ausbilden, wobei die Breite der Spiegelsegmente größer oder gleich der Breite des Blattguts gewählt ist, wobei in der ersten Fokuslinie das von einer Transportvorrichtung senkrecht zu dieser Fokuslinie transportierte Blattgut und in der zweiten Fokuslinie eine Kaltlichtquelle, z. B. eine Reihe von Leuchtdioden (LED's), angeordnet ist, wobei ein Detektor, z. B. ein CCD-Array oder einzeln oder in Gruppen angeordnete Photodioden, das vom Blattgut remittierte Licht erfasst und in Signale zur Bearbeitung in einer Bearbeitungsanlage umwandelt.

Durch die US 4,972,093 ist ein Inspektionssystem bekannt, wobei ein bewegter Prüfling von einer impulsartig angesteuerten Leuchtdiodenanordnung mit einem zwischen 20 ms und 200 ms dauernden Lichtblitz beaufschlagt wird und eine Flächenkamera ein Bild von dem gesamten Prüfling aufnimmt.

Durch die US 5,936,353 ist ein optisches System zur Erzeugung eines beleuchteten Gebildes auf einer Oberfläche eines relativ zum Gebilde bewegten Materials bekannt, wobei eine Beleuchtungseinrichtung mit mehreren elektrisch in Reihe geschalteten Lichtquellen Licht zur Erzeugung des Gebildes emittiert, wobei eine Erfassungseinrichtung mit mindestens einem Detektor von der Oberfläche des Materials remittiertes Licht erfasst, wobei die Lichtquellen auf einer Platine angeordnet sind, wobei die Platine auf einem Träger angeordnet ist, wobei der Träger in seinem Inneren mindestens einen Kanal aufweist, wobei ein flüssiges oder gasförmiges Kühlmedium zur Kühlung der Lichtquellen den Kanal durchströmt.

Durch die JP 1-255 371 A ist eine Vorrichtung zur Ansteuerung von eine zeilenförmige Beleuchtungsvorrichtung bildenden Leuchtdioden mit einer Konstantstromquelle bekannt, wobei ein Treiberkreis der Leuchtdioden über eine Abtaststeuerschaltung und einen Multiplexer mit einer Zeilenkamera verbunden ist, sodass miteinander in Wirkverbindung stehende Leuchtdioden der Beleuchtungsvorrichtung und Fotosensoren der Zeilenkamera jeweils synchronisiert sind.

Der Erfindung liegt die Aufgabe zugrunde, optische Systeme zur Erzeugung eines Beleuchtungsstreifens zu schaffen, wobei in einer vom Brennpunkt unabhängigen Anordnung der Beleuchtungsstreifen mit einer homogenen, großen Beleuchtungsstärke beaufschlagbar ist, wobei die Beleuchtungseinrichtung in ihrer Länge auf einfache Weise bedarfsgerecht angepasst werden kann.

Die Aufgabe wird erfindungsgemäß durch die Merkmale des Anspruchs 1, 8 oder 98 gelöst.

Die mit der Erfindung erzielbaren Vorteile bestehen insbesondere darin, dass die Beleuchtungseinrichtung durch ihr Reflektormodul mit den darin integrierten Funktionen äußerst kompakt baut und mithin problemlos in eine Druckmaschine oder eine ein Druckerzeugnis weiterverarbeitende Maschine integrierbar ist. Trotz der kompakten Bauweise der Beleuchtungseinrichtung wird der Beleuchtungsstreifen lichtstark und schattenfrei ausgeleuchtet, denn das Reflektormodul formt den Strahlengang des von den Lichtquellen emittierten Lichts, homogenisiert die emittierten Lichtstrahlen und bündelt diese gezielt zur Ausformung eines schmalen Lichtbandes. Der Einsatz eines Reflektormoduls gestattet auch die Ausbildung einer in Längsrichtung einfach zu skalierende Beleuchtungseinrichtung, sodass die Beleuchtungseinrichtung an jede erforderliche Formatbreite des Materials angepasst werden kann.

Weitere Vorteile bestehen darin, dass das Material, auf dessen Oberfläche der Beleuchtungsstreifen zu erzeugen ist, nicht in einem im direkten oder im umgelenkten Strahlengang liegenden Brennpunkt des von den Lichtquellen emittierten Lichtes angeordnet sein muss, um den Beleuchtungsstreifen in einer ausreichenden Beleuchtungsstärke erscheinen zu lassen. Eine vom Brennpunkt unabhängige Anordnung des Beleuchtungsstreifens relativ zum optischen System ist vorteilhaft, weil dann auf eine exakte Maßhaltigkeit bezüglich des Abstandes zwischen dem Beleuchtungsstreifen und der Beleuchtungseinrichtung verzichtet werden kann. Das vorgeschlagene optische System ist demnach zum beleuchteten Material abstandstolerant. Außerdem ist zwischen Bauelementen des optischen Systems, die durch eine Verschmutzung, z. B. durch Staub und Abrieb, in ihrer Funktion beeinträchtigt werden können, und dem Material, insbesondere auch zu einer das Material bewegenden Transporteinrichtung, ein ausreichender Abstand vorgesehen, der das optische System und das Material unter den gegebenen Betriebsbedingungen in einer Druckmaschine dauerhaft und zuverlässig außerhalb eines Berührungskontaktes belässt und das optische System vorzugsweise außerhalb der Reichweite der vom bewegten Material aufgewirbelten Schmutzpartikel anordnet.

Ein von der Beleuchtungseinrichtung beleuchteter Beleuchtungsstreifen mit einer sich auf der Oberfläche des Materials orthogonal zu seiner Länge erstreckenden Breite, d. h. ein zweidimensionales, flächiges Gebilde, hat gegenüber einem auf einen Brennpunkt fokussierten linienförmigen, d. h. nur eindimensionalen, beleuchteten Gebilde den Vorteil, dass das beleuchtete Gebilde für eine zur Oberfläche des zumindest in Teilen reflektiven Materials unter einem Reflexionswinkel angeordnete Erfassungseinrichtung zur Erfassung des von der Oberfläche des Materials remittierten Lichtes auch bei einer reliefartigen Ausgestaltung der Oberfläche des Materials zuverlässig als eine virtuelle zeilenförmige Beleuchtungseinrichtung erscheint, weil aufgrund der Breite des Beleuchtungsstreifens sichergestellt ist, dass eine an der Oberfläche des Materials vorhandene Querschnittsfläche eines Erfassungswinkels der Erfassungseinrichtung, in welchem die Erfassungseinrichtung remittiertes Licht zu erfassen vermag, zumindest einen Teil einer sich über die Breite des Beleuchtungsstreifens erstreckenden Querschnittsfläche des von der Beleuchtungseinrichtung emittierten Lichtestrahlenbündels erfasst. Bei einer Vorrichtung, die Material nur linienförmig beleuchtet, besteht die Gefahr, dass das fokussierte Strahlenbündel von einer reliefartigen Oberfläche des Materials außerhalb des Erfassungswinkels der Erfassungseinrichtung reflektiert wird und folglich nicht erfasst werden kann. Im Gegensatz dazu ist das vorgeschlagene optische System auch für eine Bildaufnahme von Material mit einer diffus reflektierenden Oberfläche gut geeignet. Selbst bei einem Material mit einer reliefartigen Oberfläche tritt kaum eine Schattenwirkung auf.

Beim vorgeschlagenen optischen System ist dessen Beleuchtungseinrichtung vorzugsweise in Modulen, d. h. in eigenständigen Funktionseinheiten, aufgebaut, was den Vorteil hat, dass eine Zeilenlänge der zeilenförmigen Beleuchtungseinrichtung ohne teure Sonderanfertigung durch einfaches Aneinanderreihen von vorgefertigten, vorzugsweise funktionsgleichen Modulen in der benötigten Anzahl an die Breite des zu beleuchtenden Materials oder zumindest an die Länge des Beleuchtungsstreifens adaptierbar ist. Gleichfalls können auch wahlweise zielgerichtet die Lichtquellen nur in denjenigen Modulen aktiviert werden, die zur Beleuchtung der Breite des zu beleuchtenden Materials oder zumindest der Länge des Beleuchtungsstreifens benötigt werden, was beim Aufbau und beim Betrieb des optischen System für dessen Wirtschaftlichkeit von Vorteil ist.

Die Verwendung von mehreren Lichtquellen je Modul hat den Vorteil, dass sich in der Praxis unvermeidbare Unterschiede in dem von den Lichtquellen abgestrahlten Licht, z. B. in dessen Wellenlänge, durch Mischung der Strahlenbündel von benachbarten Lichtquellen vergleichmäßigen und das von der Beleuchtungseinrichtung insgesamt abgestrahlte Licht in seinen optischen Eigenschaften homogenisieren. Wenn in jedem Modul vorzugsweise mehrere Gruppen von Lichtquellen angeordnet sind, wobei sich die den Gruppen zugeordneten Lichtquellen in ihren optischen Eigenschaften unterscheiden, z. B. in der Farbe des von den Lichtquellen einer jeden Gruppe ausgestrahlten Lichtes, können die einzelnen Gruppen von Lichtquellen applikationsabhängig, z. B. nach der Farbe des Lichtes, ausgewählt und angesteuert werden.

Das vorgeschlagene optische System hat den Vorteil, dass es einen unter Umständen eine große Länge von z. B. über einen Meter aufweisenden Beleuchtungsstreifen durch eine gleichmäßige, bedarfsgerechte Lichtverteilung mit einer homogenen, ausreichend großen Beleuchtungsstärke beaufschlagt und durch seinen modularen, wenig störanfälligen Aufbau auf einfache Weise an die jeweiligen Erfordernisse in einer Druckmaschine anpassbar ist. Da das zu beleuchtende Material nicht in einem Brennpunkt der Beleuchtungseinrichtung anzuordnen ist, entfällt auch die Notwendigkeit für eine exakte Ausrichtung des senkrechten Abstandes der Lichtquellen zur Oberfläche des Materials sowie eine Überwachung dieses Abstandes während des laufenden Einsatzes des optischen Systems, was die Handhabung des optischen Systems vor Ort in einem Industriebetrieb erheblich vereinfacht.

Ein weiterer Vorteil besteht darin, dass die Oberfläche des bewegten Materials unabhängig von der Geschwindigkeit des bewegten Materials immer mit der gleichen Lichtmenge beleuchtet wird, wodurch sich für die Bildaufnahme eine konstante Helligkeit ergibt und unbrauchbare Bildaufnahmen vermieden werden. Auch bildet die Einschaltdauer der Lichtquelle immer eine Teilmenge der Belichtungsdauer der Zeilenkamera, sodass für das Zeitverhalten von der Einschaltdauer der Lichtquelle und der Belichtungsdauer der Zeilenkamera eine feste Korrelation sichergestellt ist. Eine digitale Zeilenkamera weist i. d. R. einen elektronischen Shutter auf, der am Ende der Belichtungsdauer der Zeilenkamera einen Ausleseimpuls zum Auslesen der von Detektoren der Zeilenkamera aufgrund des von der Oberfläche des bewegten Materials remittierten Lichtes angesammelten elektrischen Ladung abgibt. Durch die erfindungsgemäße Korrelation zwischen der Einschaltdauer der Lichtquelle und der Belichtungsdauer der Zeilenkamera wird ein sogenanntes Überlaufen der für elektrische Ladungen empfindlichen Detektoren der Zeilenkamera vermieden. Vielmehr ergibt sich in vorteilhafter Weise zumindest über einen weiten Bereich der Geschwindigkeit des bewegten Materials eine Barriere und damit eine eindeutige Trennung zwischen in Bewegungsrichtung des Materials einander nachfolgend angeordneten Detektoren der Zeilenkamera.

Ausführungsbeispiele der Erfindung sind in den Zeichnungen dargestellt und werden im Folgenden näher beschrieben.

Es zeigen:
- Fig. 1: eine Oberfläche eines bewegten Materials mit einem Beleuchtungsstreifen in einer Draufsicht;
- Fig. 2: eine schematische Darstellung des optischen Systems;
- Fig. 3: eine einzelne Lichtquelle der Beleuchtungseinrichtung;
- Fig. 4: eine zeilenförmige Anordnung von Lichtquellen auf einer gemeinsamen Platine;
- Fig. 5: eine Strahlenbündelung mit einem ersten Spiegel;
- Fig. 6: eine Strahlenbündelung mit einem ersten Spiegel längs zur Länge des Beleuchtungsstreifens;
- Fig. 7: eine Umlenkung des Strahlenbündels aus einem zentralen Bereich der Lichtquelle mit einem zweiten Spiegel;
- Fig. 8: eine Umlenkung des Strahlenbündels aus einem zentralen Bereich der Lichtquelle mit einem zweiten Spiegel, wobei die Strahlung längs zur Länge des Beleuchtungsstreifens stärker gebündelt ist als längs zu dessen Breite;
- Fig. 9: eine Bündelung der Strahlung aus einem zentralen Bereich der Lichtquelle mit einer Konvexlinse;
- Fig. 10: eine Bündelung der Strahlung aus einem zentralen Bereich der Lichtquelle mit einer Konvexlinse, wobei die Strahlung längs zur Länge des Beleuchtungsstreifens stärker gebündelt ist als längs zu dessen Breite;
- Fig. 11: eine zumindest teilweise Überlagerung der Strahlung von zwei benachbarten Lichtquellen mit einem vorgelagerten Streukörper;
- Fig. 12: eine Seitenansicht des optischen Systems;
- Fig. 13: eine mit Lichtquellen bestückte Platine auf einem von einem Kühlmedium durchströmten Träger;
- Fig. 14: einen in zwei entgegengesetzten Richtungen von einem Kühlmedium durchströmten Träger;
- Fig. 15: einen Träger mit einer Kühlung mit zwei Peltieretementen;
- Fig. 16: eine Darstellung des Zeitverhaltens der Zeilenkamera und das der Lichtquellen ;
- Fg. 17: in einer perspektivischen Ansicht ein Reflektormodul.

Beispielsweise in einer Druckmaschine, vorzugsweise in einer Rotationsdruckmaschine, insbesondere in einer in einem Offsetdruckverfahren druckenden Druckmaschine, wird ein in der Fg. 1 dargestelltes Material 03 mit einer Oberfläche 02 in einer durch einen Pfeil angedeuteten Bewegungsrichtung 04 bewegt. Die Bewegung erfolgt durch eine, z. B. in oder an der Druckmaschine angeordnete, hier nicht dargestellte Transporteinrichtung, wobei die Bewegung des Materials 03 während des Betriebes des nachfolgend noch näher beschriebenen optischen Systems vorzugsweise in nur einer einzigen Bewegungsrichtung 04 erfolgt, und zwar vorzugsweise linear. Die Geschwindigkeit des bewegten Materials 03 kann gleichförmig oder auch veränderlich sein.

Das Material 03 ist vorzugsweise ebenflächig und flach, z. B. als ein Bogen 03 oder als eine Materialbahn 03, ausgebildet. Das Material 03 ist insbesondere als ein z. B. aus Papier bestehender Bedruckstoff 03 ausbildet, z. B. als ein Wertpapier 03 oder als eine Banknote 03. Die Oberfläche 02 des Materials 03 kann ein Relief oder eine sonstige aus der Oberfläche 02 herausragende oder in die Oberfläche 02 als eine Vertiefung eingeprägte Struktur aufweisen, wobei eine Höhe oder Tiefe des Reliefs bzw. der Struktur im Vergleich zu einer Breite B03 des Materials 03 sehr klein ist. Zumindest ein Teil der Oberfläche 02 des Materials 03 ist z. B. durch Auftragung eines reflektiven Werkstoffs, z. B. eines Lackes, oder einer Folie, durch Einbringung eines Fensterfadens oder einer anderen vorzugsweise metallischen Applikation in das Material 03, reflektiv ausgebildet.

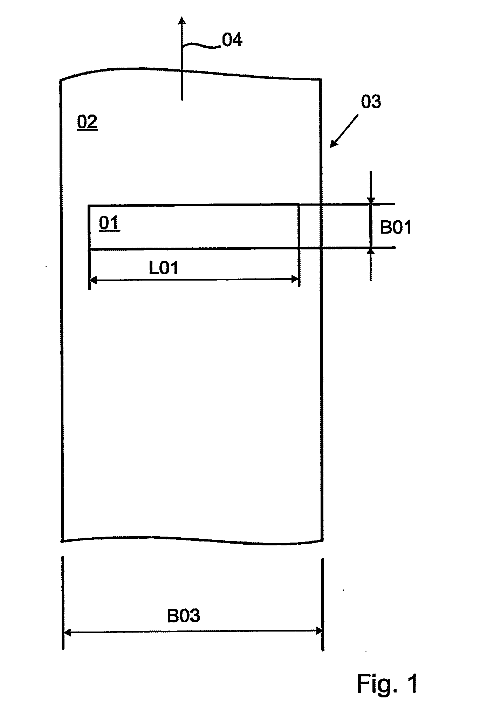

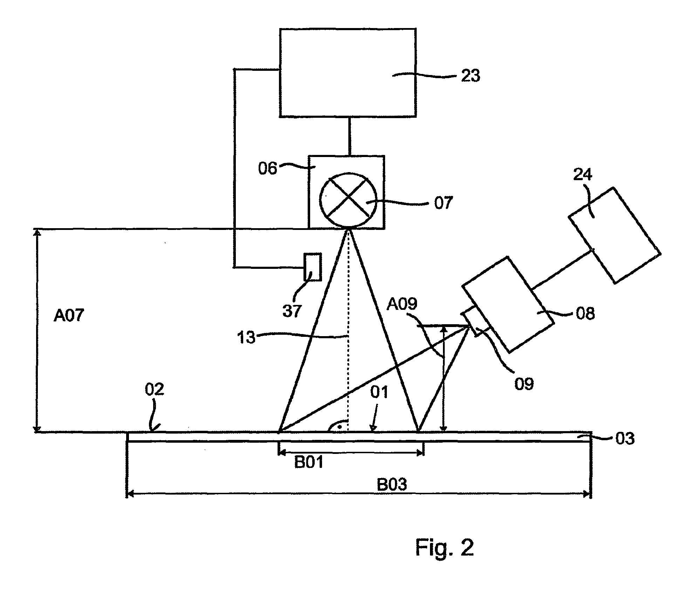

Eine in der Fig. 2 nur symbolhaft dargestellte Beleuchtungseinrichtung 06 erzeugt auf der Oberfläche 02 des Materials 03 ein beleuchtetes Gebilde 01 vorzugsweise in Form eines Beleuchtungsstreifens 01 mit einer Länge L01 und einer Breite B01 (Fig. 1), wobei sich die Breite B01 auf der Oberfläche 02 des Materials 03 orthogonal zur Länge L01 erstreckt. Die Breite B01 des Beleuchtungsstreifens 01 ist vorzugsweise in die Bewegungsrichtung 04 des Materials 03 gerichtet, wohingegen die Länge L01 des Beleuchtungsstreifens 01 vorzugsweise parallel zur Breite B03 des Materials 03 gerichtet ist und sich über Teile der Breite B03 des Materials 03 oder über dessen gesamte Breite B03 erstrecken kann. Die Breite B01 des Beleuchtungsstreifens 01 beträgt z. B. mindestens 3 mm, vorzugsweise mindestens 8 mm. Die Bewegungsrichtung 04 des Materials 03 ist somit vorzugsweise zumindest im Wesentlichen parallel zur Breite B01 des Beleuchtungsstreifens 01 gerichtet, wobei die Bewegungsrichtung 04 des Materials 03 innerhalb der von der Länge L01 und der Breite B01 des Beleuchtungsstreifens 01 aufgespannten Ebene liegt. Das Material 03 ist vorzugsweise zumindest im Bereich des Beleuchtungsstreifens 01 nicht gewölbt.

Die Beleuchtungseinrichtung 06 weist mehrere zeilenförmig nebeneinander angeordnete Lichtquellen 07 auf, sodass die gesamte Beleuchtungseinrichtung 06 zeilenförmig ausgebildet ist. Die zeilenförmig angeordneten Lichtquellen 07 der Beleuchtungseinrichtung 06 sind vorzugsweise parallel zur Länge L01 des Beleuchtungsstreifens 01 angeordnet. Die Lichtquellen 07 haben zur Oberfläche 02 des Materials 03 jeweils einen Abstand A07, wobei der Abstand A07 vorzugsweise zwischen 30 mm und 200 mm, insbesondere zwischen 70 mm und 140 mm beträgt. Der Abstand A07 der Lichtquellen 07 steht vorzugsweise jeweils lotrecht auf der Oberfläche 02 des Materials 03. Alle Lichtquellen 07 der Beleuchtungseinrichtung 06 sind vorzugsweise gleichartig ausgebildet, z. B. als helle, lichtestarke Leuchtdioden 07 oder als Laserdioden 07. In der Beleuchtungseinrichtung 06 können auch Gruppen von jeweils mehreren zeilenförmig nebeneinander angeordneten Lichtquellen 07 vorgesehen sein, wobei sich die einzelnen Gruppen von Lichtquellen 07 in ihren optischen Eigenschaften, z. B. in der Wellenlänge, des von ihnen emittierten Lichtes unterscheiden. So kann z. B. eine Gruppe von Lichtquellen 07 weißes Licht emittieren, wohingegen eine andere Gruppe von Lichtquellen 07 monochromes Licht emittiert. Es kann vorgesehen sein, dass eine mit der Beleuchtungseinrichtung 06 verbundene Steuereinrichtung 23 einzelne Lichtquellen 07 oder Gruppen von Lichtquellen 07 applikationsabhängig, z. B. in Abhängigkeit von der Beschaffenheit der Oberfläche 02 des Materials 03 nach der Farbe des Lichtes ausgewählt und jeweils einzeln sowie vorzugsweise unabhängig voneinander ansteuert, d. h. wahlweise aktiviert. So kann die Steuereinrichtung 23 eine Gruppe von Lichtquellen 07 auch unabhängig von mindestens einer anderen Gruppe von Lichtquellen 07 z. B. in ihrer Helligkeit und/oder Leuchtdauer ansteuern. Auch ist es mit der wahlweisen Aktivierung einzelner Lichtquellen 07 oder der wahlweisen Aktivierung von Gruppen von Lichtquellen 07 möglich, die Länge L01 des von den Lichtquellen 07 erzeugten - Beleuchtungsstreifens 01 variabel zu gestalten, sodass die Länge L01 des Beleuchtungsstreifens 01 auf einfache Weise z. B. an die Breite B03 des zu beleuchtenden Materials 03 angepasst werden kann. Es kann auch vorgesehen sein, dass in Längsrichtung der Beleuchtungseinrichtung 06 auf der Oberfläche 02 des Materials 03 nur ausgewählte Bereiche beleuchtet werden, wobei beleuchtete Bereiche in Längsrichtung der Beleuchtungseinrichtung 06 von unbeleuchteten oder z. B. andersfarbig beleuchteten Bereichen unterbrochen sein können. Dabei ist der Beleuchtungsstreifen 01 i. d. R. vorzugsweise jeweils außerhalb eines im direkten oder im umgelenkten Strahlengang liegenden Brennpunktes des von den Lichtquellen 07 emittierten Lichtes angeordnet.

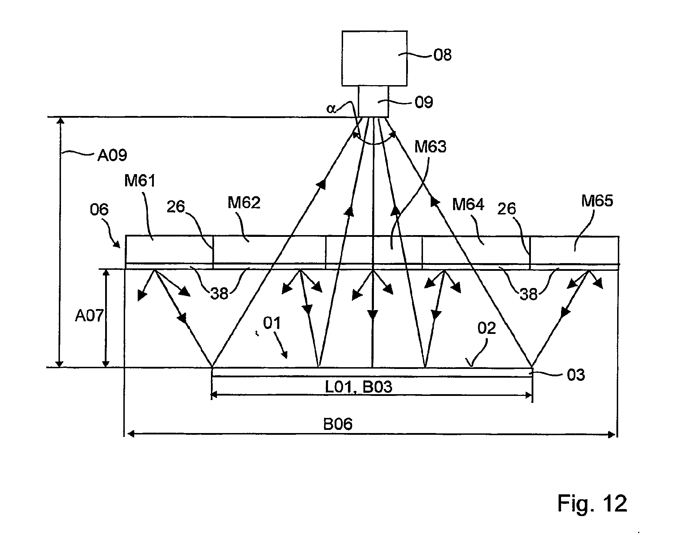

Die Beleuchtungseinrichtung 06 besteht z. B. aus mehreren zeilenförmig aneinander gereihten Modulen M61 bis M65 (Fig. 12) jeweils mit mehreren zeilenförmig nebeneinander angeordneten Lichtquellen 07, wobei eine Trennfuge 26 zwischen zwei benachbarten Modulen M61 bis M65 vorzugsweise schräg zur Länge L01 des Beleuchtungsstreifens 01 angeordnet ist. Die einzelnen Module M61 bis M65 der Beleuchtungseinrichtung 06 können z. B. funktionsgleich ausgebildet sein. So kann z. B. eine der Breite B03 des zu beleuchtenden Materials 03 entsprechende Zeilenlänge der aus mehreren aneinander gereihten Modulen M61 bis M65 zusammengesetzten Beleuchtungseinrichtung 06 durch ein Einschalten von den zeilenförmig angeordneten Lichtquellen 07 der betroffenen Module M61 bis M65 aktiviert werden oder es kann eine der Länge L01 des Beleuchtungsstreifens 01 entsprechende Zeilenlänge der aus mehreren aneinander gereihten Modulen M61 bis M65 zusammengesetzten Beleuchtungseinrichtung 06 durch ein Einschalten von den zeilenförmig angeordneten Lichtquellen 07 der betroffenen Module M61 bis M65 aktiviert werden. Auch können die Lichtquellen 07 einzelner ausgewählter Module M61 bis M65 unabhängig von den Lichtquellen 07 anderer M61 bis M65 aktiviert werden.

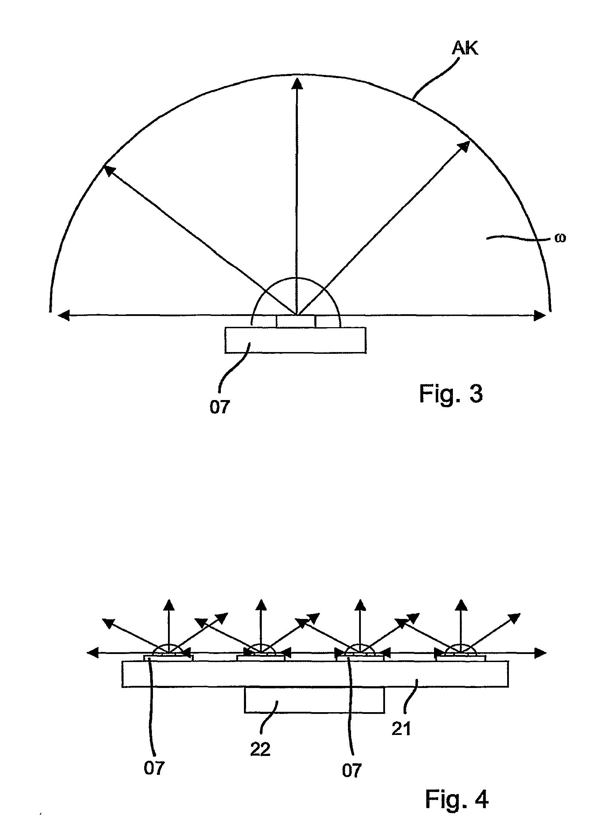

Fig. 3 zeigt in einer nur zweidimensionalen Darstellung eine einzelne Lichtquelle 07 der Beleuchtungseinrichtung 06. Die Lichtquelle 07 emittiert ihr Licht in einen Raumwinkel ω, wobei der Raumwinkel ω eine aus einer Kugel ausgeschnittene Fläche AK, also eine Kugeloberfläche AK, bis zur Größe einer Halbkugel aufspannt.

Fig. 4 zeigt mehrere, z. B. vier der in der Fig. 3 gezeigten Lichtquellen 07 zeilenförmig nebeneinander auf einer gemeinsamen Platine 21 angeordnet. Vorzugsweise ist die zu den jeweiligen Lichtquellen 07 gehörende Stromquelle 22 auf derselben Platine 21 angeordnet. Die Stromquelle 22 ist vorzugsweise als eine Konstantstromquelle 22, insbesondere als eine steuerbare Konstantstromquelle 22, ausgebildet.

Zu einem optischen System, das vorzugsweise Bestandteil eines in oder an einer Druckmaschine oder einer ein Druckerzeugnis weiterverarbeitenden Maschine angeordneten Inspektionssystems ist und das zur Beurteilung der Qualität von einem mit der Druckmaschine produzierten Druckerzeugnis verwendet wird, gehört außer der Beleuchtungseinrichtung 06 -wie es der Fig. 2 entnehmbar ist - zumindest auch eine Erfassungseinrichtung 08 mit mindestens einem in einem Abstand A09 von der Oberfläche 02 des Materials 03 angeordneten Detektor 09, wobei der Detektor 09 von der Oberfläche 02 des Materials 03 remittiertes Licht erfasst. Die Erfassungseinrichtung 08 ist z. B. als eine Kamera 08, vorzugsweise eine Zeilenkamera 08, insbesondere eine Farbzeilenkamera 08, ausgebildet. Auch die Erfassungseinrichtung 08 weist vorzugsweise mehrere zeilenförmig nebeneinander angeordnete Detektoren 09 auf, wobei die zeilenförmig angeordneten Detektoren 09 vorzugsweise parallel zur Länge L01 des Beleuchtungsstreifens 01 und/oder parallel zur Breite B03 des Materials 03 angeordnet sind. Ein zwischen Zeilen von zeilenförmig angeordneten Detektoren 09 bestehender Abstand ist vorzugsweise zur Bewegungsrichtung 04 des Materials 03 gleichgerichtet, d. h. in Bewegungsrichtung 04 des Materials 03 einander nachfolgend angeordnete Zeilen von Detektoren 09 sind vorzugsweise orthogonal zur Bewegungsrichtung 04 des Materials 03 angeordnet. Der Detektor 09 der Erfassungseinrichtung 08 kann z. B. als ein CCD-Array 09 oder als eine Gruppe von Photodioden 09 ausgebildet sein. Der Detektor 09 der Erfassungseinrichtung 08 wandelt das erfasste remittierte Licht in ein elektrisches Signal um und führt das elektrische Signal zu seiner Auswertung einer mit der Erfassungseinrichtung 08 verbundenen Bildverarbeitungseinrichtung 24 zu.

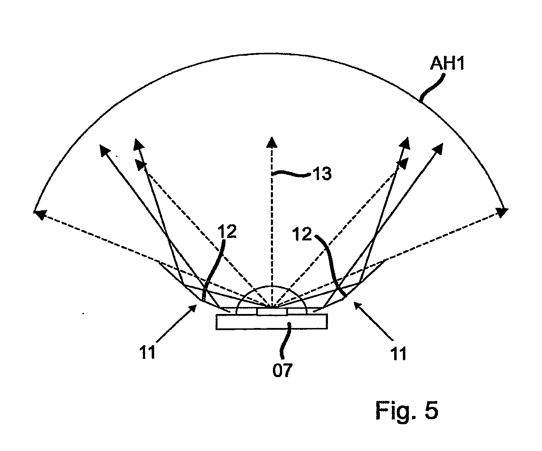

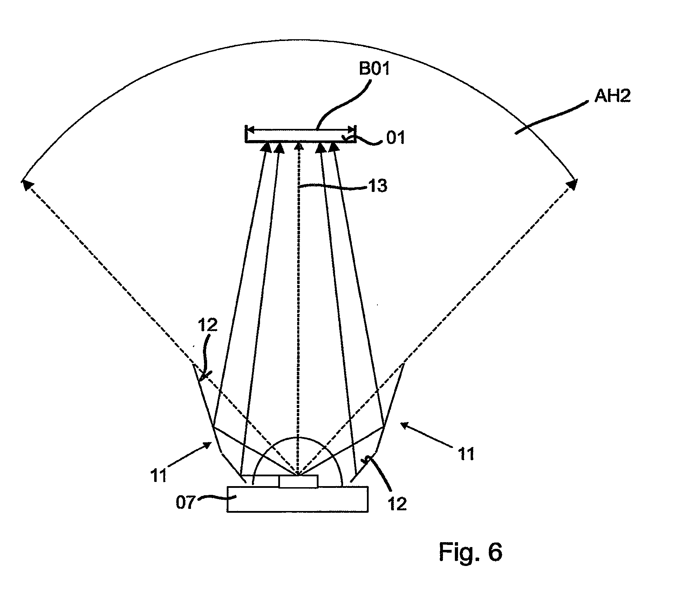

Fig. 5 zeigt, dass in dem optischen System den Lichtquellen 07 der Beleuchtungseinrichtung 06 mindestens ein erster Spiegel 11 mit mindestens einer längs zur Länge L01 und/oder zur Breite B01 des Beleuchtungsstreifens 01 gerichteten Wirkfläche 12 zugeordnet ist, wobei die Wirkfläche 12 des ersten Spiegels 11 das in den Raumwinkel ω emittierte Licht von mindestens einer der Lichtquellen 07 der Beleuchtungseinrichtung 06 auf eine kleinere erste Hüllfläche AH1 als die zu dem Raumwinkel ω gehörende Kugelfläche AK einschränkt. Die Wirkfläche 12 des ersten Spiegels 11 kann plan oder konkav ausgebildet sein. Dabei kann die mindestens eine längs zur Länge L01 des Beleuchtungsstreifens 01 gerichtete Wirkfläche 12 des ersten Spiegels 11 das in den Raumwinkel ω emittierte Licht von mindestens einer der Lichtquellen 07 der Beleuchtungseinrichtung 06 stärker auf eine kleinere zweite Hüllfläche AH2 einschränken als die mindestens eine längs zur Breite B01 des Beleuchtungsstreifens 01 gerichtete Wirkfläche 12 dieses ersten Spiegels 11, wie es die Fig. 6 im Vergleich zur Strahlenbündelung gemäß der Fig. 5 zeigt. Vorzugsweise weist mindestens eine Lichtquelle 07 der Beleuchtungseinrichtung 06 einen ersten Spiegel 11 mit mindestens zwei zu einem von der Lichtquelle 07 emittierten Zentralstrahl 13 symmetrischen Wirkflächen 12 auf.

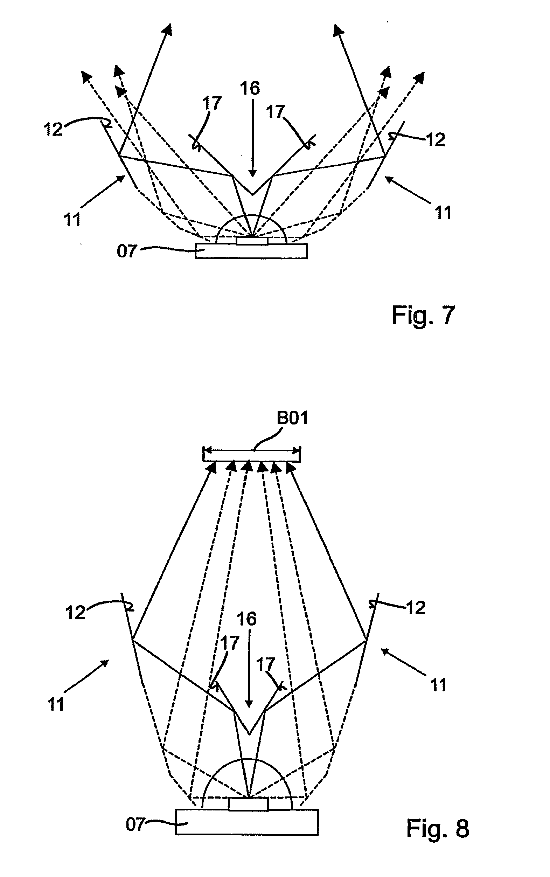

Zur Umlenkung der von mindestens einer der Lichtquellen 07 der Beleuchtungseinrichtung 06 in einem den Zentralstrahl 13 umgebenden zentralen Bereich 14 emittierten Strahlung kann, wie in den Fig. 7 und 8 dargestellt, z. B. ein zweiter Spiegel 16 vorgesehen sein, wobei dessen mindestens eine Wirkfläche 17 in dem den Strahlengang des Zentralstrahls 13 umgebenden zentralen Bereich 14 innerhalb des Raumwinkels ω des von der Lichtquelle 07 emittierten Lichtes angeordnet ist, wobei die Wirkfläche 17 des zweiten Spiegels 16 das von mindestens einer der Lichtquellen 07 der Beleuchtungseinrichtung 06 emittierte Licht gegen mindestens eine längs zur Länge L01 und/oder zur Breite B01 des Beleuchtungsstreifens 01 gerichtete Wirkfläche 12 des ersten Spiegels 11 umlenkt. Dabei kann die von der Lichtquelle 07 emittierte Strahlung vorzugsweise längs zur Länge L01 des Beleuchtungsstreifens 01 stärker gebündelt werden als die Strahlung längs zu dessen Breite B01. Auch die Wirkfläche 17 des zweiten Spiegels 16 kann plan oder konkav ausgebildet sein. Die dem zentralen Bereich 14 zuzuordnende, von den jeweiligen Lichtquellen 07 emittierte Strahlung ist in den Fig. 7 bis 10 jeweils mit durchgängigen Pfeillinien angedeutet, wohingegen von den Lichtquellen 07 in ihrem jeweiligen Raumwinkel ω peripher emittierte Strahlung mit gestrichelten Pfeillinien angedeutet ist.

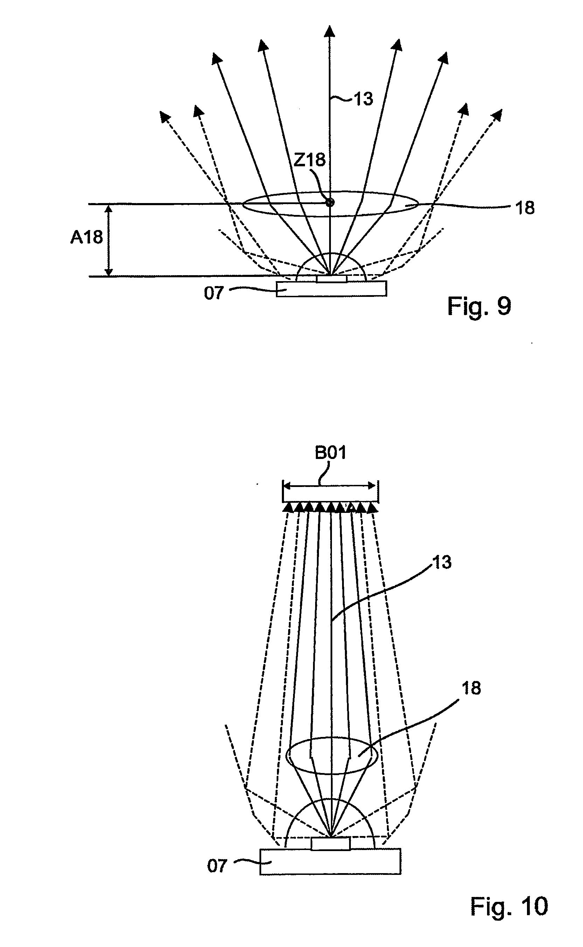

Alternativ kann gleichfalls zur Umlenkung der von mindestens einer der Lichtquellen 07 der Beleuchtungseinrichtung 06 in einem den Zentralstrahl 13 umgebenden zentralen Bereich 14 emittierten Strahlung gemäß den Fig. 9 und 10 mindestens eine Linse 18, insbesondere eine bikonvexe Linse 18, in dem den Strahlengang des Zentralstrahls 13 umgebenden zentralen Bereich 14 innerhalb des Raumwinkels ω des von mindestens einer der Lichtquellen 07 der Beleuchtungseinrichtung 06 emittierten Lichtes angeordnet sein, wobei zwischen der Lichtquelle 07 und einem Zentrum Z18 der Linse 18 ein Abstand A18 besteht, wobei der Abstand A18 vorzugsweise geringer als die Hälfte des Abstandes A07 zwischen der Lichtquelle 07 und der Oberfläche 02 des Materials 03 ist. Dabei kann die Linse 18 nicht rotationssymmetrisch ausgebildet sein, um die von der Lichtquelle 07 emittierte Strahlung vorzugsweise längs zur Länge L01 des Beleuchtungsstreifens 01 stärker zu bündeln als längs zu dessen Breite B01.

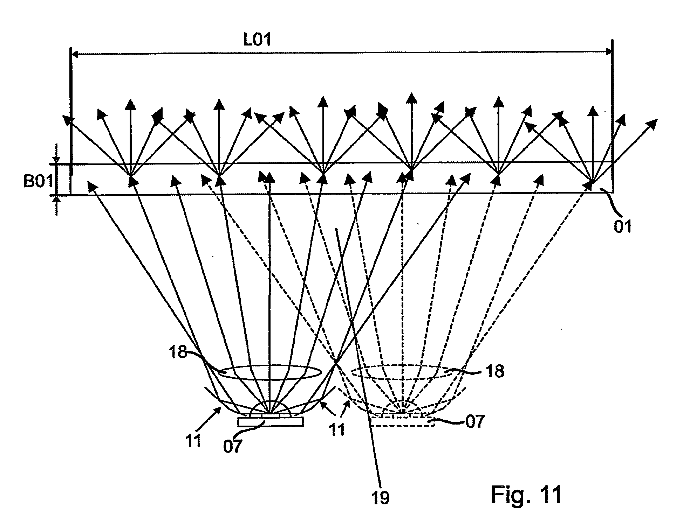

Die Fig. 11 zeigt, dass die Lichtquellen 07 der Beleuchtungseinrichtung 06 vorzugsweise derart angeordnet sind, dass sich die jeweiligen Raumwinkel ω oder zumindest die Hüllflächen AH1; AH2 des von mindestens zwei benachbarten Lichtquellen 07 der Beleuchtungseinrichtung 06 emittierten Lichtes zumindest in einem den Beleuchtungsstreifen 01 beleuchtenden Teilbereich 19 überlagern. Diese Überlagerung ist insbesondere auch dann vorgesehen, wenn die beteiligten benachbarten Lichtquellen 07 in zwei benachbarten Modulen M61 bis M65 angeordnet sind. Aus der Fig. 11 ist auch ersichtlich, dass an jeder einzelnen Lichtquelle 07 der Beleuchtungseinrichtung 06 jeweils ein erster Spiegel 11 mit mindestens einer Wirkfläche 12, vorzugsweise mit zwei zueinander symmetrischen Wirkflächen 12, zumindest längs zur Breite B01 des Beleuchtungsstreifens 01 vorgesehen sein kann.

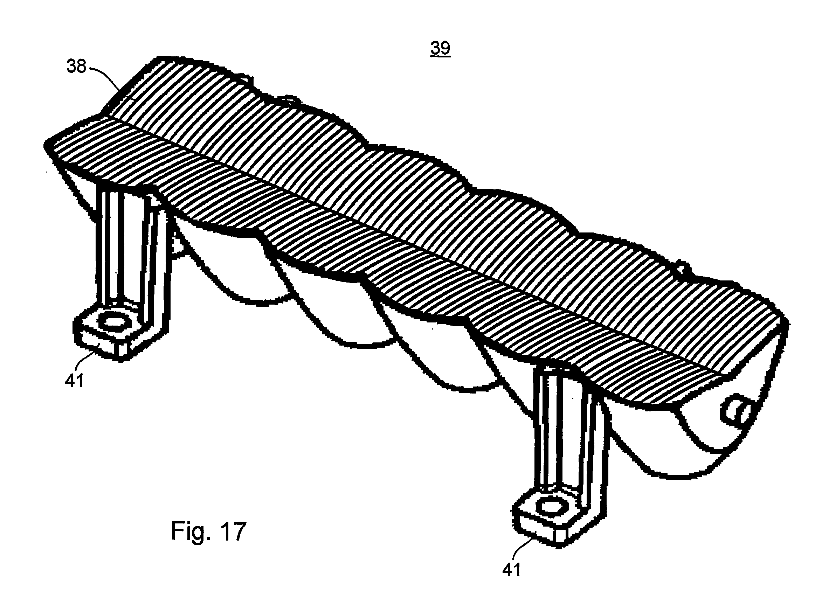

Des Weiteren kann die Beleuchtungseinrichtung 06 an einer der Oberfläche 02 des Materials 03 zugewandten Seite, d. h. an einer Lichtaustrittsseite der Beleuchtungseinrichtung 06, einen Streukörper 38, d. h. einen Licht streuenden Körper, aufweisen, z. B. ein Lentikular oder eine Prismenfolie, wobei der Streukörper 38 das von den Lichtquellen 07 auf die Oberfläche 02 des Materials 03 abgestrahlte Licht vorzugsweise nur oder zumindest ganz überwiegend längs zur Länge L01 des Beleuchtungsstreifens 01 verteilt. In einer bevorzugten Ausführung sind der Streukörper 38 und zumindest einer der Spiegel 11; 16 der Beleuchtungseinrichtung 06 in einem einzigen, als Reflektormodul 39 bezeichneten Bauteil ausgebildet, wobei vorzugsweise eine Gruppe von z. B. fünf bis zehn linienförmig nebeneinander angeordneten Lichtquellen 07 ihr Licht jeweils in ein entlang dieser Reihe von Lichtquellen 07 angeordnetes Reflektormodul 39 einstrahlen. Zu diesem Zweck sind die Lichtquellen 07 an der der Lichtaustrittsseite diametral gegenüberliegenden Seite des Reflektormoduls 39 angeordnet oder dort sogar in den Reflektormodul 39 eingesenkt. Das Reflektormodul 39 ist ein z. B. aus einem vorzugsweise transparenten Kunststoff spritzgießtechnisch gefertigtes Bauteil. Das Reflektormodul 39 ist demnach vorzugsweise als ein insbesondere massives Formteil ausgebildet, in dem der Streukörper 38 und zumindest einer der Spiegel 11; 16 gemeinsam ausgebildet sind, und zwar derart, dass in dem Formteil keine optisch relevante Grenzfläche den Streukörper 38 von dem mindestens einen Spiegel 11; 16 trennt. Fig. 17 zeigt in einer perspektivischen Ansicht beispielhaft ein Reflektormodul 39 mit einem an der Lichtaustrittsfläche vorzugsweise integriert ausgebildeten Streukörper 38, wobei der Streukörper 38 an der Lichtaustrittsfläche des Reflektormoduls 39 z. B. als eine Rillenstruktur ausgebildet ist, d. h. an dem Formteil z. B. angeformt sind, wobei das Reflektormodul 39 in der Beleuchtungseinrichtung 06 derart angeordnet wird, dass die parallel verlaufenden Rillen vorzugsweise mit der Bewegungsrichtung 04 des Materials 03 gleichgerichtet sind. Auch die Anordnung der Spiegel 11; 16 und/oder die Linse 18 können integrativ in dem Reflektormodul 39 ausgebildet sein. Das Reflektormodul 39 ist vorzugsweise mit einer sich in Längsrichtung der Beleuchtungseinrichtung 06 erstreckenden Vertiefung ausgebildet, wobei die Vertiefung die Lichtaustrittsfläche des Reflektormoduls 39 in zwei vorzugsweise gleich breite Teilbereiche teilt, wobei mindestens einer, vorzugsweise jeder dieser Teilbereiche der Lichtaustrittsfläche des Reflektormoduls 39 seinerseits als eine Linse, insbesondere als eine Konvexlinse ausgebildet ist. Mindestens einer, vorzugsweise jeder dieser Teilbereiche der Lichtaustrittsfläche des Reflektormoduls 39 bündelt den an der Lichtaustrittsfläche des Reflektormoduls 39 austretenden Lichtstrom in Richtung des auf der Oberfläche 02 des Materials 03 auszubildenden Beleuchtungsstreifens 01. Das Reflektormodul 39 ist vorzugsweise aus mehreren aneinandergereihten Segmenten aufgebaut, wobei jedes Segment den von einer der Lichtquellen 07 in das Reflektormodul 39 eingespeisten Lichtstrahlengang formt. Das Reflektormodul 39 ist vorzugsweise auf der die Lichtquellen 07 tragenden Platine 21 oder auf dem Träger 27 z. B. mit an dem Reflektormodul 39 angeformten Montageelementen 41 aufmontiert. Jedem der längs zur Breite B01 des Beleuchtungsstreifens 01 angeordneten Modulen M61 bis M65 ist vorzugsweise jeweils mindestens ein Reflektormodul 39 zugeordnet.

Der Streukörper 38 der Beleuchtungseinrichtung 06 wirkt damit gleichfalls wie die Anordnung der Spiegel 11; 16 und/oder der Linse 18 hinsichtlich der Verteilung des von den Lichtquellen 07 emittierten Lichtes formend und homogenisierend. Insbesondere der Streukörper 38 trägt zu einer diffusen, schattenfreien Ausleuchtung des Beleuchtungsstreifens 01 selbst auf einer mit einer feinen Struktur versehenen Oberfläche 02 des Materials 03 bei, wobei der Beleuchtungsstreifen 01 trotz des Abstandes A07, den die Lichtquellen 07 jeweils zur Oberfläche 02 des Materials 03 aufweisen, gleichzeitig als ein sehr helles Leuchtband ausgebildet wird. Die Anordnung der Spiegel 11;16 und/oder der Linse 18 sowie insbesondere der Streukörper 38 tragen dazu bei, dass aus der Beleuchtungseinrichtung 06 Licht in einer homogenen Lichtverteilung austritt und somit selbst auf einer spiegelnden Oberfläche 02 des Materials 03, z. B. auf einem reflektierenden Lack, einem Kaltsiegel, einem Fensterfaden, einem Patch oder ähnlichem, eine innere Struktur der Beleuchtungseinrichtung 06, d. h. die Anordnung von deren einzelnen Lichtquellen 07, nicht abgebildet und folglich auch bei einer Betrachtung unter dem entsprechenden Reflexionswinkel nicht sichtbar wird.

Fig. 12 zeigt eine Ansicht des optischen Systems, wobei die Betrachtung aus einer lotrecht zur Bewegungsrichtung 04 des Materials 03 stehenden Ebene erfolgt. Die Beleuchtungseinrichtung 06 und der auf der Oberfläche 02 des Materials 03 beleuchtete Beleuchtungsstreifen 01 sind im Abstand A07 parallel zueinander angeordnet, jedoch kann eine Erstreckung der Beleuchtungseinrichtung 06, d. h. ihre Länge B06, größer sein als die Länge L01 des Beleuchtungsstreifens 01 oder als die Breite B03 des Materials 03. Die Beleuchtungseinrichtung 06 ist in mehrere Module M61 bis M65 aufgeteilt, d. h. in diesem Beispiel in fünf zeilenförmig nebeneinander angeordnet Module M61 bis M65, wobei die in jedem Modul M61 bis M65 angeordneten Lichtquellen 07 jeweils Licht zum Beleuchtungsstreifen 01 emittieren. Das vom Beleuchtungsstreifen 01 remittierte Licht wird von dem im Abstand A09 von der Oberfläche 02 des Materials 03 angeordneten Detektor 09 der Erfassungseinrichtung 08 innerhalb eines sich längs zur Länge L01 des Beleuchtungsstreifens 01 öffnenden, räumlichen Erfassungswinkels α erfasst, wobei der Erfassungswinkel α in diesem Beispiel derart bemessen ist, das er das vom Beleuchtungsstreifen 01 remittierte Licht über die gesamte Länge L01 des Beleuchtungsstreifens 01 erfasst. Der Erfassungswinkel α bildet an der Oberfläche 02 des Materials 03 eine Querschnittsfläche aus, sodass der Erfassungswinkel α zumindest einen Teil einer sich über die Breite B01 des Beleuchtungsstreifens 01 erstreckenden Querschnittsfläche des von der Beleuchtungseinrichtung 06 emittierten Lichtestrahlenbündels erfasst. Die vom Erfassungswinkel α erfasste Querschnittsfläche ist vorzugsweise zumindest so groß wie die auf der Oberfläche 02 des Materials 03 durch die Länge L01 und Breite B01 des Beleuchtungsstreifens 01 aufgespannte Fläche. In Bewegungsrichtung 04 des Materials 03 sind die Beleuchtungseinrichtung 06 und die Erfassungseinrichtung 08 vorzugsweise derart voneinander beabstandet angeordnet, dass das von den Lichtquellen 07 der Beleuchtungseinrichtung 06 zur Oberfläche 02 des Materials 03 emittierte Licht von der Oberfläche 02 des Materials 03 zum Detektor 09 der Erfassungseinrichtung 08 entsprechend der Gesetzmäßigkeit "Einfallswinkel ist gleich Ausfallswinkel" remittiert wird. Der aufgrund des "Einfallswinkels" erwartete "Ausfallswinkel", d. h. der Reflexionswinkel, kann jedoch in Abhängigkeit von der Beschaffenheit der Oberfläche 02 des Materials 03, insbesondere in Abhängigkeit von deren Struktur, insbesondere Mikrostrukturen, auch von der vorgenannten, von einer vollständig spiegelnden Fläche ausgehenden Idealbedingung abweichen.

Die Qualität eines mit der Erfassungseinrichtung 08 durch Erfassung des vom Beleuchtungsstreifen 01 remittierten Lichtes aufgenommenen Bildes ist maßgeblich davon abhängig, dass die Lichtquellen 07 der Beleuchtungseinrichtung 06 Licht konstanter Lichtstärke emittieren. Denn Schwankungen in der Lichtstärke des von den Lichtquellen 07 emittierten Lichtes führen in der Erfassungseinrichtung 08 bezüglich des der Bildverarbeitungseinrichtung 24 zugeführten Signals zu demselben Ergebnis wie Änderungen in der Beschaffenheit der Oberfläche 02 des angestrahlten Materials 03, sodass in der Bildverarbeitungseinrichtung 24 die Ursachen einer Signaländerung nicht unterschieden werden können. Unter diesen Umständen lassen sich aus einer in der Bildverarbeitungseinrichtung 24 vorgenommenen Bildauswertung keine verlässlichen Aussagen über die Beschaffenheit der Oberfläche 02 des angestrahlten Materials 03 gewinnen.

Abhilfe bieten hier Maßnahmen, die die Lichtstärke des von den Lichtquellen 07 der Beleuchtungseinrichtung 06 emittierten Lichtes konstant halten. Die in der Beleuchtungseinrichtung 06 verwendeten Lichtquellen 07 sind vorzugsweise als lichtstarke Leuchtdioden 07 oder Laserdioden 07 ausgebildet, deren Lichtstärke temperaturabhängig ist. Im Folgenden werden zur Erzielung einer konstanten Lichtstärke Maßnahmen zur Temperaturstabilisierung der auf dem Träger 21 angeordneten Lichtquellen 07 beschrieben. Der Vorteil der vorgeschlagenen Lösung besteht darin, dass die thermische Last der Lichtquellen 07 direkt am Entstehungsort abgeführt wird, wodurch sich kurze Regelzeiten erreichen lassen.

Die Lichtquellen 07 sind vorzugsweise auf einer mit weiteren elektronischen Bauelementen bestückbaren und mit Leiterbahnen versehenen Platine 21 angeordnet.

Der Halbleiter der Leuchtdioden 07 oder Laserdioden 07 steht vorzugsweise in direktem Berührungskontakt mit der Platine 21, die z. B. als MCPCB (metal core printed circuit board) oder als eine Platine 21 mit einem Kern aus Aluminium ausgebildet ist und an ihrer die Leuchtdioden 07 oder Laserdioden 07 tragenden Montageseite 32 zur Ausbildung eines möglichst geringen Wärmeübergangswiderstandes nur eine sehr dünne Auflage auf ihrem wärmeleitenden Untergrund aufweist.

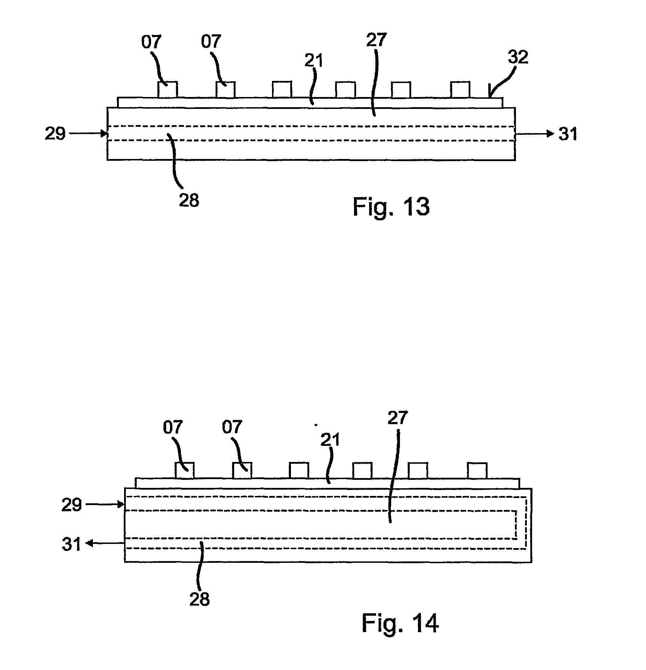

Fig. 13 zeigt eine Platine 21 mit mehreren darauf zeilenförmig angeordneten Lichtquellen 07, wobei die Platine 21 ihrerseits auf einem Träger 27 angeordnet ist, wobei der Träger 27 vorzugsweise in seinem Inneren vorzugsweise unterhalb der zeilenförmigen Anordnung der Lichtquellen 07 mindestens einen Kanal 28 aufweist, wobei ein flüssiges oder gasförmiges Kühlmedium, z. B. Wasser oder Luft, den Kanal 28 durchströmt. Vorzugsweise stirnseitig am Träger 27 sind zur Zuführung und Abführung des Kühlmediums eine mit einem Vorlauf verbundene Öffnung 29 und eine mit einem Rücklauf verbundene Öffnung 31 vorgesehen, wobei das Kühlmedium den Träger 27 z. B. geradlinig durchströmt. Fig. 14 zeigt einen Träger 27, den das Kühlmedium in zwei einander entgegengesetzten Richtungen durchströmt, wodurch im Träger 27 ein entlang der zeilenförmigen Anordnung der Lichtquellen 07 ausgeglichenes Temperaturprofil erreicht wird. Dazu kann der Kanal 28 an einem Ende des Trägers 27 um 180° umgelenkt sein.

Eine nicht dargestellte Regeleinrichtung kann die Temperatur des Kühlmediums am Vorlauf und die durch den Kanal 28 strömende Durchflussmenge konstant halten. Alternativ kann die Regeleinrichtung auch eine Differenz zwischen der Temperatur des Kühlmediums am Vorlauf und der Temperatur des Kühlmediums am Rücklauf konstant halten. Dabei ist weniger die absolute Temperatur des Kühlmediums von Bedeutung, sondern vielmehr, dass eine für die Lichtquellen 07 maximal zulässige Temperatur, die sich aus den Wärmeübergangswiderständen der beteiligten Werkstoffe ergibt, nicht überschritten wird, was von der Regeleinrichtung durch eine Überwachung der Temperatur und einen darauf reagierenden Regelungseingriff verhindert wird. Wenn ein in seiner Temperatur oder Durchflussmenge regelbares Kühlmedium nicht zur Verfügung steht, kann die Kühlung der Lichtquellen 07 auch über ein externes, nicht mit der Platine 21 verbundenes Kühlgerät (nicht dargestellt) erfolgen.

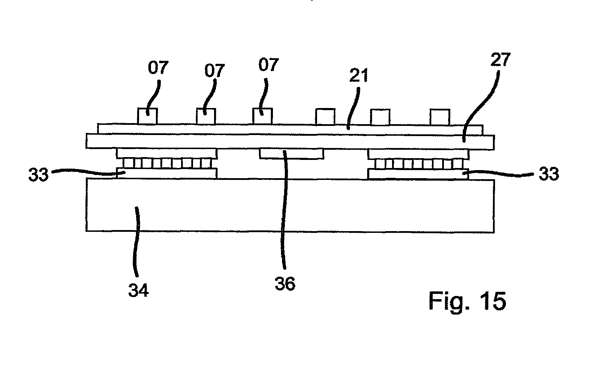

Eine Alternative zur Verwendung eines strömenden Kühlmediums zeigt die Fig. 15. Die mit den Lichtquellen 07 bestückte Platine 21 ist auf einem Träger 27 angeordnet, wobei der Träger 27 seinerseits auf mindestens einem Peltierelement 33, vorzugsweise aber mehreren Peltierelementen 33, angeordnet ist, wobei die Peltierelemente 33 jeweils mit einem vom Träger 27 thermisch getrennten Kühlkörper 34 verbunden sind. Eine notwendige Temperaturmessung zur Regelung des mindestens einen Peltierelements 33 durch eine nicht dargestellte elektronische Regeleinrichtung wird direkt an dem Träger 27 durch einen an diesem angebrachten Temperatursensor 36 vorgenommen. Bei schwankender Umgebungstemperatur schwankt dann nur die Temperatur des Kühlkörpers 34, nicht aber die Temperatur der auf der Platine 21 angeordneten Lichtquellen 07. Die elektronische Regeleinrichtung kann in der mit der Beleuchtungseinrichtung 06 verbundenen Steuereinrichtung 23 integriert sein.

Da die Bewegung des bewegten Materials 03 in einer Druckmaschine oder einer ein Druckerzeugnis weiter verarbeitenden Maschine mit einer Geschwindigkeit von mehreren Metern pro Sekunde erfolgt, z. B. 3 m/s oder mehr, wobei z. B. in einer Bogendruckmaschine 15.000 oder auch mehr Bogen 03 pro Stunde bedruckt und durch die Druckmaschine transportiert werden, ist das optische System derart auszulegen, dass von dem bewegten Material 03 eine brauchbare Bildaufnahme möglich ist. Dabei ist zu beachten, dass sich bei einer als eine Zeilenkamera 08 ausgebildeten Erfassungseinrichtung 08 die erfasste Menge des von der Oberfläche 02 des bewegten Materials 03 remittierten Lichtes in Abhängigkeit von der Geschwindigkeit des bewegten Materials 03 ändert. Dadurch ändert sich auch die Helligkeit der Bildaufnahme. Bei größeren Geschwindigkeitsänderungen, wie sie in den genannten Maschinen üblicherweise auftreten können, kann die Bildaufnahme unbrauchbar werden.

Statt die Bildaufnahme der Erfassungseinrichtung 08, z. B. der Zeilenkamera 08, mit einem Encoder mit der Geschwindigkeit des bewegten Materials 03 zu synchronisieren, wird vorgeschlagen, eine Einschaltdauer t3 einer einzelnen Lichtquelle 07 oder einer Gruppe von Lichtquellen 07 der Beleuchtungseinrichtung 06, die vorzugsweise von einer von der Steuereinrichtung 23 gesteuerten Stromquelle 22, insbesondere einer Konstantstromquelle 22, angesteuert werden, mit einer Triggerung, d. h. einer Belichtungsdauer t1 der Zeilenkamera 08 zu synchronisieren, sodass die Oberfläche 02 des bewegten Materials 03 unabhängig von der Geschwindigkeit des bewegten Materials 03 immer mit der gleichen Lichtmenge beleuchtet wird. Dadurch ergibt sich eine konstante Helligkeit für das von der Erfassungseinrichtung 08, z. B. der Zeilenkamera 08 aufgenommene Bild über einen weiten Bereich der Geschwindigkeit des bewegten Materials 03, denn die Steuereinrichtung 23 bemisst die Einschaltdauer t3 einer einzelnen Lichtquelle 07 oder einer Gruppe von Lichtquellen 07 der Beleuchtungseinrichtung 06 stets geringer als die Belichtungsdauer t1 der Zeilenkamera 08.

Vorzugsweise sind - wie bereits beschrieben - in der Beleuchtungseinrichtung 06 mehrere Gruppen von Lichtquellen 07 vorgesehen, denen vorzugsweise jeweils mindestens eine Stromquelle 22, insbesondere eine Konstantstromquelle 22, zugeordnet ist. Die Einschaltzeiten t3 der Lichtquellen 07 werden von der mit der Beleuchtungseinrichtung 06 verbundenen Steuereinrichtung 23 z. B. gruppenweise oder auch einzeln unabhängig voneinander von den jeweiligen Stromquellen 22 angesteuert, sodass sich über die Länge der vorzugsweise zeilenförmig angeordneten Lichtquellen 07 der Beleuchtungseinrichtung 06 ein Lichtmengenprofil einstellen lässt. Die Einstellung eines Lichtmengenprofils vorzugsweise längs zur Länge L01 des Beleuchtungsstreifens 01 hat den Vorteil, dass Transmissionsverluste durch eine nicht dargestellte Optik der Erfassungseinrichtung 08, z. B. der Zeilenkamera 08, ausgeglichen werden können.

Darüber hinaus kann vorgesehen sein, dass ein z. B. mit der Steuereinrichtung 23 verbundener Lichtsensor 37 die abgestrahlte Lichtmenge der Lichtquellen 07 der Beleuchtungseinrichtung 06 misst, um anhand des Messsignals des Lichtsensors 37 die Einschaltdauer t3 der von den Stromquellen 22 mit der Steuereinrichtung 23 gesteuerten Lichtquellen 07 z. B. an ein Degradationsverhalten der Lichtquellen 07 anzupassen und mit der Ansteuerung der Lichtquellen 07 z. B. eine mit ihrer Alterung nachlassende Abstrahlung in ihrer Lichtmenge zu kompensieren. Auch kann die Steuereinrichtung 23 die Einschaltdauer t3 der Lichtquellen 07 z. B. an unterschiedliche optische Eigenschaften des zu beleuchtenden Materials 03 anpassen, insbesondere automatisch anpassen.

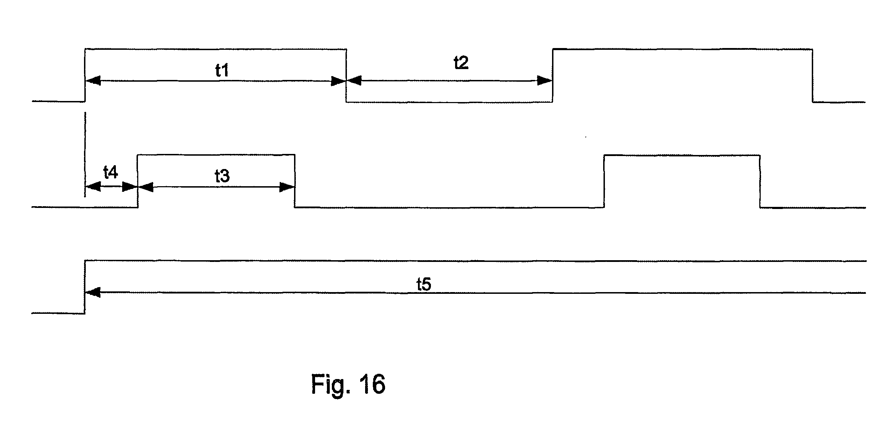

Fig. 16 zeigt das Zeitverhalten der Erfassungseinrichtung 08, z. B. der Zeilenkamera 08, und das der Lichtquellen 07 der Beleuchtungseinrichtung 06. Die Zeilenkamera 08 wird gemäß dem oberen, ersten Zeitverlauf zu einem bestimmten Zeitpunkt eingeschaltet, sodass zu diesem Zeitpunkt die Belichtungsdauer t1 der Zeilen kamera 08 beginnt. Nach Ablauf der Belichtungsdauer t1 folgt unmittelbar eine von der Geschwindigkeit des bewegten Materials 03 abhängige Auszeit t2 zwischen zwei in der Bewegungsrichtung 04 des Materials 03 einander nachfolgenden, benachbarten Bildzeilen der Zeilenkamera 08. Zumindest eine in Abhängigkeit von der Steuerung der Zeilenkamera 08 getriggerte Lichtquelle 07 wird gemäß dem mittleren, zweiten Zeitverlauf in der Fig. 16 von der von der Steuereinrichtung 23 gesteuerten Stromquelle 22 gleichzeitig mit der Belichtungsdauer t1 der Zeilenkamera 08 angesteuert, wobei nach einer Verzögerungszeit t4 für die Einschaltung der Lichtquelle 07, d. h. nach einer physikalisch bedingten Zeit bis zum Beginn ihrer Lichtemission, diese Lichtquelle 07 dann für die Einschaltdauer t3 eingeschaltet bleibt, wobei die Einschaltdauer t3, vorzugsweise auch eine Summe bestehend aus der Verzögerungszeit t4 und der Einschaltdauer t3, geringer bemessen ist als die Belichtungsdauer t1 der Zeilenkamera 08. Das Zeitverhalten für die Zeilenkamera 08 und die Lichtquellen 07 wiederholt sich periodisch in der zuvor beschriebenen festen Korrelation. Nur als Vergleich zu der in ihrer Einschaltdauer t3 getriggerten Lichtquelle 07 ist in dem unteren, dritten Zeitverlauf der Fig. 16 das Zeitverhalten der Einschaltdauer t5 für eine Konstantlichtquelle dargestellt.

### Bezugszeichenliste

- 01: Gebilde, Beleuchtungsstreifen
- 02: Oberfläche
- 03: Material, Bogen, Materialbahn, Bedruckstoff, Wertpapier, Banknote
- 04: Bewegungsrichtung
- 05: -
- 06: Beleuchtungseinrichtung
- 07: Lichtquelle, Leuchtdiode, Laserdiode
- 08: Erfassungseinrichtung, Kamera, Zeilenkamera, Farbzeilenkamera
- 09: Detektor, CCD-Array, Photodiode
- 10: -
- 11: Spiegel, erster
- 12: Wirkfläche
- 13: Zentralstrahl
- 14: zentraler Bereich
- 15: -
- 16: Spiegel, zweiter
- 17: Wirkfläche
- 18: Linse
- 19: Teilbereich
- 20: -
- 21: Platine
- 22: Stromquelle, Konstantstromquelle
- 23: Steuereinrichtung
- 24: Bildverarbeitungseinrichtung
- 25: -
- 26: Trennfuge
- 27: Träger
- 28: Kanal
- 29: Öffnung
- 30: -
- 31: Öffnung
- 32: Montageseite
- 33: Peltierelement
- 34: Kühlkörper
- 35: -
- 36: Temperatursensor
- 37: Lichtsensor
- 38: Streukörper
- 39: Reflektormodul
- 40: -
- 41: Montageelement

- A07: Abstand
- A09: Abstand
- A18: Abstand
- B01: Breite
- B03: Breite
- B06: Länge
- L01: Länge
- Z18: Zentrum

- AH1: Hüllfläche, erste
- AH2: Hüllfläche, zweite
- AK: Fläche, Kugeloberfläche

- M61: Modul
- M62: Modul
- M63: Modul
- M64: Modul
- M65: Modul

- t1: Belichtungsdauer
- t2: Auszeit
- t3: Einschaltdauer
- t4: Verzögerungszeit
- t5: Einschaltdauer

- α: Erfassungswinkel
- ω: Raumwinkel

## Patentansprüche

1. Optisches System zur Erzeugung eines Beleuchtungsstreifens (01) auf einer Oberfläche (02) eines Materials (03), wobei eine Beleuchtungseinrichtung (06) mit mehreren Lichtquellen (07) in einem Abstand (A07) von der Oberfläche (02) des Materials (03) angeordnet ist, wobei die Beleuchtungseinrichtung (06) mit ihren Licht emittierenden Lichtquellen (07) auf der Oberfläche (02) des relativ zur Beleuchtungseinrichtung (06) bewegten Materials (03) den Beleuchtungsstreifen (01) erzeugt, wobei die Beleuchtungseinrichtung (06) einen das von den Lichtquellen (07) emittierte Licht auf den Beleuchtungsstreifen (01) bündelnden Spiegel (11; 16) und an ihrer der Oberfläche (02) des Materials (03) zugewandten Lichtaustrittsseite einen Streukörper (38) aufweist, wobei die Beleuchtungseinrichtung (06) mindestens ein den Streukörper (38) und den Spiegel (11; 16) aufweisendes Reflektormodul (39) aufweist, wobei die Lichtquellen (07) ihr Licht in das Reflektormodul (39) einspeisen, **dadurch gekennzeichnet, dass** die von der Lichtquelle (07) emittierte Strahlung längs zur Länge (L01) des Beleuchtungsstreifens (01) stärker gebündelt ist als die Strahlung längs zu dessen Breite (B01).

2. Optisches System nach Anspruch 1, **dadurch gekennzeichnet, dass** die Beleuchtungseinrichtung (06) aus mehreren aneinander gereihten Modulen (M61 bis M65) jeweils mit mehreren nebeneinander angeordneten Lichtquellen (07) besteht.

3. Optisches System nach Anspruch 2, **dadurch gekennzeichnet, dass** mehrere der aneinander gereihten Module (M61 bis M65) mindestens ein Reflektormodul (39) aufweisen.

4. Optisches System nach Anspruch 1, **dadurch gekennzeichnet, dass** die Lichtquellen (07) in Gruppen eingeteilt sind.

5. Optisches System nach Anspruch 4, **dadurch gekennzeichnet, dass** eine Steuereinrichtung (23) vorgesehen ist, wobei die Steuereinrichtung (23) eine Gruppe von Lichtquellen (07) unabhängig von mindestens einer anderen Gruppe von Lichtquellen (07) steuert.

6. Optisches System nach Anspruch 2, **dadurch gekennzeichnet, dass** eine einer Breite (B03) des zu beleuchtenden Materials (03) entsprechende Zeilenlänge der aus mehreren aneinander gereihten Modulen (M61 bis M65) zusammengesetzten Beleuchtungseinrichtung (06) durch ein Einschalten von den Lichtquellen (07) der betroffenen Module (M61 bis M65) aktivierbar ist.

7. Optisches System nach Anspruch 2, **dadurch gekennzeichnet, dass** eine der Länge (L01) des Beleuchtungsstreifens (01) entsprechende Zeilenlänge der aus mehreren aneinander gereihten Modulen (M61 bis M65) zusammengesetzten Beleuchtungseinrichtung (06) durch ein Einschalten von den Lichtquellen (07) der betroffenen Module (M61 bis M65) aktivierbar ist.

8. Optisches System zur Erzeugung eines Beleuchtungsstreifens (01) auf einer Oberfläche (02) eines Materials (03), wobei eine Beleuchtungseinrichtung (06) mit mehreren Lichtquellen (07) in einem Abstand (A07) von der Oberfläche (02) des Materials (03) angeordnet ist, wobei die Beleuchtungseinrichtung (06) mit ihren Licht emittierenden Lichtquellen (07) auf der Oberfläche (02) des relativ zur Beleuchtungseinrichtung (06) bewegten Materials (03) den Beleuchtungsstreifen (01) erzeugt, wobei die Beleuchtungseinrichtung (06) aus mehreren in ihrer Längsrichtung aneinander gereihten Modulen (M61 bis M65) besteht, wobei jedes Modul (M61 bis M65) jeweils mindestens eine Lichtquelle (07) aufweist, **dadurch gekennzeichnet, dass** eine mit der Beleuchtungseinrichtung (06) verbundene Steuereinrichtung (23) die jeweils mindestens eine Lichtquelle (07) von mindestens zwei unterschiedlichen Modulen (M61 bis M65) unabhängig von der mindestens einen Lichtquelle (07) des jeweils anderen Moduls (M61 bis M65) steuert.

9. Optisches System nach Anspruch 8, **dadurch gekennzeichnet, dass** die Beleuchtungseinrichtung (06) einen das von der mindestens einen Lichtquelle (07) emittierte Licht auf den Beleuchtungsstreifen (01) bündelnden Spiegel (11; 16) aufweist.

10. Optisches System nach Anspruch 8, **dadurch gekennzeichnet, dass** die Beleuchtungseinrichtung (06) an ihrer der Oberfläche (02) des Materials (03) zugewandten Lichtaustrittsseite einen Streukörper (38) aufweist.

11. Optisches System nach Anspruch 8, **dadurch gekennzeichnet, dass** die Beleuchtungseinrichtung (06) mindestens ein Reflektormodul (39) aufweist.

12. Optisches System nach Anspruch 8, **dadurch gekennzeichnet, dass** jedes Modul (M61 bis M65) mindestens ein Reflektormodul (39) aufweist.

13. Optisches System nach Anspruch 8, **dadurch gekennzeichnet, dass** die mindestens eine Lichtquelle (07) jedes Moduls (M61 bis M65) ihr Licht jeweils in das Reflektormodul (39) einspeist.

14. Optisches System nach Anspruch 9 und 10, **dadurch gekennzeichnet, dass** das Reflektormodul (39) den Streukörper (38) und den Spiegel (11; 16) in einem einzigen Bauteil ausbildet.

15. Optisches System nach Anspruch 8, **dadurch gekennzeichnet, dass** jedes Modul (M61 bis M65) mindestens eine Gruppe von mehreren Lichtquellen (07) aufweist.

16. Optisches System nach Anspruch 8, **dadurch gekennzeichnet, dass** alle Lichtquellen (07) derselben Gruppe ihr Licht jeweils in dasselbe Reflektormodul (39) einspeisen.

17. Optisches System nach Anspruch 8, **dadurch gekennzeichnet, dass** jedes Modul (M61 bis M65) eine Steuereinrichtung (23) zur Steuerung der mindestens einen Lichtquelle (07) jedes Moduls (M61 bis M65) aufweist.

18. Optisches System nach Anspruch 2 oder 8, **dadurch gekennzeichnet, dass** eine Trennfuge (26) zwischen zwei benachbarten Modulen (M61 bis M65) schräg zur Länge (L01) des Beleuchtungsstreifens (01) angeordnet ist.

19. Optisches System nach Anspruch 2 oder 8, **dadurch gekennzeichnet, dass** die Module (M61 bis M65) der Beleuchtungseinrichtung (06) funktionsgleich ausgebildet sind.

20. Optisches System nach Anspruch 1 oder 8, **dadurch gekennzeichnet, dass** die Lichtquellen (07) auf einer von einem Kühlmedium gekühlten Platine (21) angeordnet sind.

21. Optisches System nach Anspruch 1 oder 8, **dadurch gekennzeichnet, dass** die Lichtquellen (07) und ihre jeweilige Stromquelle (22) auf derselben Platine (21) angeordnet sind.

22. Optisches System nach Anspruch 1, 11 oder 12, **dadurch gekennzeichnet, dass** das Reflektormodul (39) auf der die Lichtquellen (07) tragenden Platine (21) oder auf dem Träger (27) angeordnet ist.

23. Optisches System nach Anspruch 1 oder 10, **dadurch gekennzeichnet, dass** der Streukörper (38) an der Lichtaustrittsfläche des Reflektormoduls (39) als eine Rillenstruktur ausgebildet ist.

24. Optisches System nach Anspruch 23, **dadurch gekennzeichnet, dass** die Rillenstruktur des Streukörpers (38) an der Lichtaustrittsfläche des Reflektormoduls (39) angeformt ist.

25. Optisches System nach Anspruch 1, 11 oder 12, **dadurch gekennzeichnet, dass** das Reflektormodul (39) eine sich in Längsrichtung der Beleuchtungseinrichtung (06) erstreckende Vertiefung aufweist.

26. Optisches System nach Anspruch 25, **dadurch gekennzeichnet, dass** die Vertiefung die Lichtaustrittsfläche des Reflektormoduls (39) in zwei Teilbereiche teilt, wobei mindestens einer dieser Teilbereiche der Lichtaustrittsfläche des Reflektormoduls (39) seinerseits als eine Linse ausgebildet ist.

27. Optisches System nach Anspruch 26, **dadurch gekennzeichnet, dass** die beiden Teilbereiche der Lichtaustrittsfläche des Reflektormoduls (39) gleich breit ausgebildet sind.

28. Optisches System nach Anspruch 26, **dadurch gekennzeichnet, dass** der als eine Linse ausgebildete Teilbereich der Lichtaustrittsfläche des Reflektormoduls (39) als eine Konvexlinse ausgebildet ist.

29. Optisches System nach Anspruch 26, **dadurch gekennzeichnet, dass** mindestens einer dieser Teilbereiche der Lichtaustrittsfläche des Reflektormoduls (39) den an der Lichtaustrittsfläche des Reflektormoduls (39) austretenden Lichtstrom in Richtung des auf der Oberfläche (02) des Materials (03) auszubildenden Beleuchtungsstreifens (01) bündelt.

30. Optisches System nach Anspruch 1 oder 9, **dadurch gekennzeichnet, dass** das Reflektormodul (39) als ein massives Formteil ausgebildet ist, wobei in dem Formteil keine optisch relevante Grenzfläche den Streukörper (38) von dem mindestens einen Spiegel (11; 16) trennt.

31. Optisches System nach Anspruch 1 oder 10, **dadurch gekennzeichnet, dass** der Streukörper (38) als ein Lentikular oder als eine Prismenfolie ausgebildet ist.

32. Optisches System nach Anspruch 1, 11 oder 12, **dadurch gekennzeichnet, dass** die Lichtquellen (07) an der der Lichtaustrittsseite diametral gegenüberliegenden Seite des Reflektormoduls (39) angeordnet sind.

33. Optisches System nach Anspruch 1, 11 oder 12, **dadurch gekennzeichnet, dass** die Lichtquellen (07) an der der Lichtaustrittsseite diametral gegenüberliegenden Seite des Reflektormoduls (39) in das Reflektormodul (39) eingesenkt sind.

34. Optisches System nach Anspruch 1, 11 oder 12, **dadurch gekennzeichnet, dass** das Reflektormodul (39) aus einem Kunststoff gefertigt ist.

35. Optisches System nach Anspruch 1, 11 oder 12, **dadurch gekennzeichnet, dass** das Reflektormodul (39) aus einem transparenten Kunststoff gefertigt ist.

36. Optisches System nach Anspruch 1, 11 oder 12, **dadurch gekennzeichnet, dass** das Reflektormodul (39) spritzgießtechnisch gefertigt ist.

37. Optisches System nach Anspruch 1, 11 oder 12, **dadurch gekennzeichnet, dass** das Reflektormodul (39) in Längsrichtung der Beleuchtungseinrichtung (06) aus mehreren aneinandergereihten Segmenten aufgebaut ist, wobei jedes Segment den von einer der Lichtquellen (07) in das Reflektormodul (39) eingespeisten Lichtstrahlengang formt.

38. Optisches System nach Anspruch 1, 11 oder 12, **dadurch gekennzeichnet, dass** das Reflektormodul (39) das von den Lichtquellen (07) emittierte Licht hinsichtlich des Beleuchtungsstreifens (01) formt und homogenisiert.

39. Optisches System nach Anspruch 8, **dadurch gekennzeichnet, dass** die Beleuchtungseinrichtung (06) den Beleuchtungsstreifen (01) mit einer sich auf der Oberfläche (02) des Materials (03) orthogonal zu seiner Länge (L01) erstreckenden Breite (B01) ausbildet.

40. Optisches System nach Anspruch 1 oder 8, **dadurch gekennzeichnet, dass** der Beleuchtungsstreifen (01) außerhalb eines im Strahlengang liegenden Brennpunktes des von den Lichtquellen (07) emittierten Lichtes angeordnet ist.

41. Optisches System nach Anspruch 1 oder 9, **dadurch gekennzeichnet, dass** der Spiegel (11) mindestens eine längs zur Länge (L01) und/oder zur Breite (B01) des Beleuchtungsstreifens (01) gerichtete Wirkfläche (12) aufweist.

42. Optisches System nach Anspruch 41, **dadurch gekennzeichnet, dass** der Spiegel (11) mit seiner Wirkfläche (12) das von mindestens einer der Lichtquellen (07) der Beleuchtungseinrichtung (06) in einen Raumwinkel (ω) emittierte Licht auf eine kleinere erste Hüllfläche (AH1) als die zu dem Raumwinkel (ω) gehörende Kugelfläche (AK) einschränkt.

43. Optisches System nach Anspruch 1 oder 9, **dadurch gekennzeichnet, dass** ein weiterer Spiegel (16) mit mindestens einer Wirkfläche (17) in einem den Strahlengang des Zentralstrahls (13) umgebenden zentralen Bereich (14) innerhalb des Raumwinkels (ω) des von mindestens einer der Lichtquellen (07) der Beleuchtungseinrichtung (06) emittierten Lichtes angeordnet ist.

44. Optisches System nach Anspruch 43, **dadurch gekennzeichnet, dass** die Wirkfläche (17) des weiteren Spiegels (16) das von mindestens einer der Lichtquellen (07) der Beleuchtungseinrichtung (06) emittierte Licht zunächst gegen mindestens eine längs zur Länge (L01) und/oder zur Breite (B01) des Beleuchtungsstreifens (01) gerichtete Wirkfläche (12) des ersten Spiegels (11) und dann mit der Wirkfläche (12) des ersten Spiegels (11) zum Beleuchtungsstreifen (01) umlenkt.

45. Optisches System nach Anspruch 1 oder 8, **dadurch gekennzeichnet, dass** mindestens eine Linse (18) in einem den Strahlengang des Zentralstrahls (13) umgebenden zentralen Bereich (14) innerhalb des Raumwinkels (ω) des von mindestens einer der Lichtquellen (07) der Beleuchtungseinrichtung (06) emittierten Lichtes angeordnet ist.

46. Optisches System nach Anspruch 45, **dadurch gekennzeichnet, dass** die Linse (18) zumindest einen Teil des von mindestens einer der Lichtquellen (07) in den Raumwinkel (ω) emittierten, von der Wirkfläche (12) des ersten Spiegels (11) nicht auf den Beleuchtungsstreifen (01) umgelenkten Lichtes bündelt.

47. Optisches System nach Anspruch 8, **dadurch gekennzeichnet, dass** die von der Lichtquelle (07) emittierte Strahlung längs zur Länge (L01) des Beleuchtungsstreifens (01) stärker gebündelt ist als die Strahlung längs zu dessen Breite (B01).

48. Optisches System nach Anspruch 1, 9 oder 45, **dadurch gekennzeichnet, dass** die Anordnung der Spiegel (11; 16) und/oder die Linse (18) integrativ in dem Reflektormodul (39) ausgebildet sind.

49. Optisches System nach Anspruch 42, **dadurch gekennzeichnet, dass** der Raumwinkel (ω) eine aus einer Kugel ausgeschnittene Fläche (AK) bis zur Größe einer Halbkugel aufspannt.

50. Optisches System nach Anspruch 1 oder 9, **dadurch gekennzeichnet, dass** die mindestens eine längs zur Länge (L01) des Beleuchtungsstreifens (01) gerichtete Wirkfläche (12) des ersten Spiegels (11) das in den Raumwinkel (ω) emittierte Licht von mindestens einer der Lichtquellen (07) der Beleuchtungseinrichtung (06) stärker auf eine kleinere zweite Hüllfläche (AH2) einschränkt als die mindestens eine längs zur Breite (B01) des Beleuchtungsstreifens (01) gerichtete Wirkfläche (12) des ersten Spiegels (11).

51. Optisches System nach Anspruch 1 oder 8, **dadurch gekennzeichnet, dass** mindestens eine Lichtquelle (07) der Beleuchtungseinrichtung (06) einen ersten Spiegel (11) mit mindestens zwei zu einem von der Lichtquelle (07) emittierten Zentralstrahl (13) symmetrischen Wirkflächen (12) aufweist.

52. Optisches System nach Anspruch 1 oder 9, **dadurch gekennzeichnet, dass** die Wirkfläche (12) des ersten Spiegels (11) plan oder konkav ausgebildet ist.

53. Optisches System nach Anspruch 43, **dadurch gekennzeichnet, dass** die Wirkfläche (17) des zweiten Spiegels (16) plan oder konkav ausgebildet ist.

54. Optisches System nach Anspruch 1 oder 9, **dadurch gekennzeichnet, dass** an jeder einzelnen Lichtquelle (07) der Beleuchtungseinrichtung (06) jeweils ein erster Spiegel (11) mit mindestens einer Wirkfläche (12) zumindest längs zur Breite (B01) des Beleuchtungsstreifens (01) vorgesehen ist.

55. Optisches System nach Anspruch 45, **dadurch gekennzeichnet, dass** die Linse (18) als eine bikonvexe Linse (18) ausgebildet ist.

56. Optisches System nach Anspruch 45, **dadurch gekennzeichnet, dass** zwischen der Lichtquelle (07) und einem Zentrum (Z18) der Linse (18) ein Abstand (A18) besteht, wobei der Abstand (A18) geringer als die Hälfte des Abstandes (A07) zwischen der Lichtquelle (07) und der Oberfläche (02) des Materials (03) ist.

57. Optisches System nach Anspruch 45, **dadurch gekennzeichnet, dass** die Linse (18) nicht rotationssymmetrisch ausgebildet ist.

58. Optisches System nach Anspruch 42, **dadurch gekennzeichnet, dass** sich die jeweiligen Raumwinkel (ω) oder zumindest die Hüllflächen (AH1; AH2) des von mindestens zwei benachbarten Lichtquellen (07) der Beleuchtungseinrichtung (06) emittierten Lichtes zumindest in einem den Beleuchtungsstreifen (01) beleuchtenden Teilbereich (19) überlagern.

59. Optisches System nach Anspruch 42, **dadurch gekennzeichnet, dass** sich die jeweiligen Raumwinkel (ω) oder zumindest die Hüllflächen (AH1; AH2) des von mindestens zwei benachbarten, in zwei benachbarten Modulen (M61 bis M65) angeordneten Lichtquellen (07) emittierten Lichtes zumindest in ihrem den Beleuchtungsstreifen (01) beleuchtenden Teilbereich (19) überlagern.

60. Optisches System nach Anspruch 1 oder 8, **dadurch gekennzeichnet, dass** alle Lichtquellen (07) der Beleuchtungseinrichtung (06) gleichartig ausgebildet sind.

61. Optisches System nach Anspruch 1 oder 8, **dadurch gekennzeichnet, dass** die Lichtquellen (07) der Beleuchtungseinrichtung (06) als Leuchtdioden (07) oder als Laserdioden (07) ausgebildet sind.

62. Optisches System nach Anspruch 1 oder 8, **dadurch gekennzeichnet, dass** die Lichtquellen (07) der Beleuchtungseinrichtung (06) monochromes Licht emittieren.

63. Optisches System nach Anspruch 1 oder 8, **dadurch gekennzeichnet, dass** die Bewegungsrichtung (04) des Materials (03) linear ist.

64. Optisches System nach Anspruch 1 oder 15, **dadurch gekennzeichnet, dass** die Lichtquellen (07) zeilenförmig angeordnet sind.

65. Optisches System nach Anspruch 64, **dadurch gekennzeichnet, dass** die zeilenförmig angeordneten Lichtquellen (07) der Beleuchtungseinrichtung (06) parallel zur Länge (L01) des Beleuchtungsstreifens (01) angeordnet sind.

66. Optisches System nach Anspruch 1 oder 8, **dadurch gekennzeichnet, dass** die Bewegungsrichtung (04) des Materials (03) im Wesentlichen parallel zur Breite (B01) des Beleuchtungsstreifens (01) gerichtet ist.

67. Optisches System nach Anspruch 1 oder 8, **dadurch gekennzeichnet, dass** das Material (03) zumindest im Bereich des Beleuchtungsstreifens (01) nicht gewölbt ist.

68. Optisches System nach Anspruch 1 oder 8, **dadurch gekennzeichnet, dass** das Material (03) ebenflächig ausgebildet ist

69. Optisches System nach Anspruch 1 oder 8, **dadurch gekennzeichnet, dass** das Material (03) flach ausgebildet ist.

70. Optisches System nach Anspruch 1 oder 8, **dadurch gekennzeichnet, dass** das Material (03) als ein Bogen (03) ausgebildet ist.

71. Optisches System nach Anspruch 1 oder 8, **dadurch gekennzeichnet, dass** das Material (03) als eine Materialbahn (03) ausgebildet ist.

72. Optisches System nach Anspruch 1 oder 8, **dadurch gekennzeichnet, dass** das Material (03) als ein Bedruckstoff (03) ausgebildet ist.

73. Optisches System nach Anspruch 1 oder 8, **dadurch gekennzeichnet, dass** das Material (03) aus Papier besteht.

74. Optisches System nach Anspruch 1 oder 8, **dadurch gekennzeichnet, dass** das Material (03) als ein Wertpapier (03) oder als eine Banknote (03) ausgebildet ist.

75. Optisches System nach Anspruch 1 oder 8, **dadurch gekennzeichnet, dass** die Oberfläche (02) des Materials (03) ein Relief oder eine sonstige aus der Oberfläche (02) herausragende oder in die Oberfläche (02) als eine Vertiefung eingeprägte Struktur aufweist.

76. Optisches System nach Anspruch 1 oder 8, **dadurch gekennzeichnet, dass** die Breite (B01) des Beleuchtungsstreifens (01) mindestens 3 mm beträgt.

77. Optisches System nach Anspruch 1 oder 8, **dadurch gekennzeichnet, dass** die Breite (B01) des Beleuchtungsstreifens (01) mindestens 8 mm beträgt.

78. Optisches System nach Anspruch 1 oder 8, **dadurch gekennzeichnet, dass** der Abstand (A07) von der Oberfläche (02) des Materials (03) zu den Lichtquellen (07) jeweils zwischen 30 mm und 200 mm beträgt.

79. Optisches System nach Anspruch 1 oder 8, **dadurch gekennzeichnet, dass** der Abstand (A07) von der Oberfläche (02) des Materials (03) zu den Lichtquellen (07) jeweils zwischen 70 mm und 140 mm beträgt.

80. Optisches System nach Anspruch 1 oder 8, **dadurch gekennzeichnet, dass** der Abstand (A07) zu den Lichtquellen (07) lotrecht auf der Oberfläche (02) des Materials (03) steht.

81. Optisches System nach Anspruch 1 oder 8, **dadurch gekennzeichnet, dass** eine Erfassungseinrichtung (08) mit mindestens einem in einem Abstand (A09) von der Oberfläche (02) des Materials (03) angeordneten Detektor (09) von den Lichtquellen (07) emittiertes Licht erfasst.

82. Optisches System nach Anspruch 1 oder 8, **dadurch gekennzeichnet, dass** eine Erfassungseinrichtung (08) mit mindestens einem in einem Abstand (A09) von der Oberfläche (02) des Materials (03) angeordneten Detektor (09) von der Oberfläche (02) des Materials (03) remittiertes Licht erfasst.

83. Optisches System nach Anspruch 81 oder 82, **dadurch gekennzeichnet, dass** die Erfassungseinrichtung (08) in der Bewegungsrichtung (04) des Materials (03) mehrere einander nachfolgend angeordnete Detektoren (09) aufweist.

84. Optisches System nach Anspruch 81 oder 82, **dadurch gekennzeichnet, dass** die Erfassungseinrichtung (08) zeilenförmig angeordnete Detektoren (09) aufweist.

85. Optisches System nach Anspruch 83, **dadurch gekennzeichnet, dass** zeilenförmig angeordnete Detektoren (09) der Erfassungseinrichtung (08) parallel zur Länge (L01) des Beleuchtungsstreifens (01) angeordnet sind.

86. Optisches System nach Anspruch 81 oder 82, **dadurch gekennzeichnet, dass** die Erfassungseinrichtung (08) einen räumlichen Erfassungswinkel (α) aufweist, wobei der Erfassungswinkel (α) an der Oberfläche (02) des Materials (03) eine Querschnittsfläche ausbildet.

87. Optisches System nach Anspruch 86, **dadurch gekennzeichnet, dass** die Erfassungseinrichtung (08) mit ihrer im Erfassungswinkel (α) liegenden Querschnittsfläche zumindest einen Teil des über die Breite (B01) des Beleuchtungsstreifens (01) von der Beleuchtungseinrichtung (06) emittierten Lichtestrahlenbündels erfasst.

88. Optisches System nach Anspruch 81 oder 82, **dadurch gekennzeichnet, dass** die Erfassungseinrichtung (08) als eine Kamera (08) ausgebildet ist.

89. Optisches System nach Anspruch 81 oder 82, **dadurch gekennzeichnet, dass** die Erfassungseinrichtung (08) als eine Zeilenkamera (08) ausgebildet ist.

90. Optisches System nach Anspruch 81 oder 82, **dadurch gekennzeichnet, dass** der Detektor (09) der Erfassungseinrichtung (08) als ein CCD-Array (09) oder als eine Gruppe von Photodioden (09) ausgebildet ist.

91. Optisches System nach Anspruch 81 oder 82, **dadurch gekennzeichnet, dass** der Detektor (09) der Erfassungseinrichtung (08) das erfasste remittierte Licht in ein elektrisches Signal umwandelt.

92. Optisches System nach Anspruch 91, **dadurch gekennzeichnet, dass** der Detektor (09) der Erfassungseinrichtung (08) das elektrische Signal einer Bildverarbeitungseinrichtung (24) zuführt.

93. Optisches System nach Anspruch 1 oder 8, **dadurch gekennzeichnet, dass** es in einer Druckmaschine angeordnet ist.

94. Optisches System nach Anspruch 1 oder 8, **dadurch gekennzeichnet, dass** es in einer Rotationsdruckmaschine angeordnet ist.

95. Optisches System nach Anspruch 1 oder 8, **dadurch gekennzeichnet, dass** es in einer in einem Offsetdruckverfahren oder in einem Stahlstichverfahren oder in einem Siebdruckverfahren oder in einem Heißprägeverfahren druckenden Druckmaschine angeordnet ist.

96. Optisches System nach Anspruch 1 oder 8, **dadurch gekennzeichnet, dass** es in einer ein Druckerzeugnis weiterverarbeitenden Maschine angeordnet ist.

97. Optisches System nach Anspruch 1 oder 8, **dadurch gekennzeichnet, dass** es als ein Inline-Inspektionssystem ausgebildet ist.

98. Optisches System zur Erzeugung eines Beleuchtungsstreifens (01) auf einer Oberfläche (02) eines Materials (03), wobei eine Beleuchtungseinrichtung (06) mit ihren Lichtquellen (07) in einem Abstand (A07) von der Oberfläche (02) des Materials (03) angeordnet ist, wobei mehrere Lichtquellen (07) der Beleuchtungseinrichtung (06) in Längsrichtung dieser Beleuchtungseinrichtung (06) angeordnet sind, wobei die Beleuchtungseinrichtung (06) mit ihren Licht emittierenden Lichtquellen (07) auf der Oberfläche (02) des relativ zur Beleuchtungseinrichtung (06) bewegten Materials (03) den Beleuchtungsstreifen (01) erzeugt, **dadurch gekennzeichnet, dass** eine mit der Beleuchtungseinrichtung (06) verbundene Steuereinrichtung (23) mindestens eine der in Längsrichtung der Beleuchtungseinrichtung (06) angeordneten Lichtquellen (07) einzeln und unabhängig von mindestens einer anderen in Längsrichtung der Beleuchtungseinrichtung (06) angeordneten Lichtquelle (07) steuert.

99. Optisches System nach Anspruch 98, **dadurch gekennzeichnet, dass** die mit der Beleuchtungseinrichtung (06) verbundene Steuereinrichtung (23) die in Längsrichtung der Beleuchtungseinrichtung (06) angeordneten Lichtquellen (07) wahlweise aktiviert.

100. Optisches System nach Anspruch 98, **dadurch gekennzeichnet, dass** die mit der Beleuchtungseinrichtung (06) verbundene Steuereinrichtung (23) mit den in Längsrichtung der Beleuchtungseinrichtung (06) angeordneten Lichtquellen (07) die Länge (L01) des Beleuchtungsstreifens (01) an die Breite (B03) des zu beleuchtenden Materials (03) anpasst.

101. Optisches System nach Anspruch 98, **dadurch gekennzeichnet, dass** die mit der Beleuchtungseinrichtung (06) verbundene Steuereinrichtung (23) mit den in Längsrichtung der Beleuchtungseinrichtung (06) angeordneten Lichtquellen (07) in Längsrichtung der Beleuchtungseinrichtung (06) auf der Oberfläche (02) des Materials (03) ausgewählte Bereiche beleuchtet.

102. Optisches System nach Anspruch 101, **dadurch gekennzeichnet, dass** die in Längsrichtung der Beleuchtungseinrichtung (06) auf der Oberfläche (02) des Materials (03) beleuchteten Bereiche von unbeleuchteten oder andersfarbig beleuchteten Bereichen unterbrochen sind.

103. Optisches System nach Anspruch 98, **dadurch gekennzeichnet, dass** die in Längsrichtung der Beleuchtungseinrichtung (06) angeordneten Lichtquellen (07) in Gruppen eingeteilt sind.

104. Optisches System nach Anspruch 98, **dadurch gekennzeichnet, dass** die Beleuchtungseinrichtung (06) in ihrer Längsrichtung mehrere aneinander gereihte Module (M61 bis M65) aufweist.

105. Optisches System nach Anspruch 98, **dadurch gekennzeichnet, dass** die Lichtquellen (07) ihr Licht jeweils in ein Reflektormodul (39) einspeisen, wobei das Reflektormodul (39) den Streukörper (38) und den Spiegel (11; 16) in einem einzigen Bauteil ausbildet.

106. Optisches System nach Anspruch 104, **dadurch gekennzeichnet, dass** jedes Modul (M61 bis M65) jeweils mindestens eine Lichtquelle (07) oder mindestens eine Gruppe von Lichtquellen (07) aufweist.

107. Optisches System nach Anspruch 105, **dadurch gekennzeichnet, dass** mindestens ein Modul (M61 bis M65) mindestens ein Reflektormodul (39) aufweist.

## Claims

1. An optical system for producing an illumination strip (01) on a surface (02) of a material (03), wherein an illumination device (06) with a plurality of light sources (07) is arranged at a distance (A07) from the surface (02) of the material (03), wherein the illumination device (06) with its light-emitting light sources (07) produces the illumination strip (01) on the surface (02) of the material (03) which is moved relative to the illumination device (06), wherein the illumination device (06) has a mirror (11; 16) bundling the light emitted by the light sources (07) onto the illumination strip (01) and a diffuser (38) on its light-emergence side facing the surface (02) of the material (03), wherein the illumination device (06) has at least one reflector module (39) comprising the diffuser (38) and the mirror (11; 16), wherein the light sources (07) feed their light into the reflector module (39), **characterized in that** the radiation emitted by the light source (07) is bundled to a greater degree longitudinally with respect to the length (L01) of the illumination strip (01) than the radiation longitudinally with respect to the width (B01) thereof.

2. An optical system according to Claim 1, **characterized in that** the illumination device (06) comprises a plurality of modules (M61 to M65) arranged in a row adjacent to one another and having a plurality of light sources (07) arranged adjacent to one another in each case.

3. An optical system according to Claim 2, **characterized in that** a plurality of the modules (M61 to M65) arranged in a row adjacent to one another have at least one reflector module (39).

4. An optical system according to Claim 1, **characterized in that** the light sources (07) are combined to form groups.

5. An optical system according to Claim 4, **characterized in that** a control device (23) is provided, wherein the control device (23) controls a group of light sources (07) in a manner independent of at least one other group of light sources (07).

6. An optical system according to Claim 2, **characterized in that** a line length - corresponding to a width (B03) of the material (03) to be illuminated - of the illumination device (06) formed from a plurality of modules (M61 to M65) arranged in a row adjacent to one another is capable of being activated by switching on the light sources (07) of the modules (M61 to M65) in question.

7. An optical system according to Claim 2, **characterized in that** a line length - corresponding to the length (L01) of the illumination strip (01) - of the illumination device (06) formed from a plurality of modules (M61 to M65) arranged in a row adjacent to one another is capable of being activated by switching on the light sources (07) of the modules (M61 to M65) in question.

8. An optical system for producing an illumination strip (01) on a surface (02) of a material (03), wherein an illumination device (06) with a plurality of light sources (07) is arranged at a distance (A07) from the surface (02) of the material (03), wherein the illumination device (06) with its light-emitting light sources (07) produces the illumination strip (01) on the surface (02) of the material (03) which is moved relative to the illumination device (06), wherein the illumination device (06) comprises a plurality of modules (M61 to M65) arranged in a row adjacent to one another in its longitudinal direction, wherein each module (M61 to M65) has at least one light source (07) in each case, **characterized in that** a control device (23) connected to the illumination device (06) controls the at least one light source (07) in each case of at least two different modules (M61 to M65) in a manner independent of the at least one light source (07) of the other module (M61 to M65) in each case.

9. An optical system according to Claim 8, **characterized in that** the illumination device (06) has a mirror (11; 16) bundling the light emitted by at least one light source (07) onto the illumination strip (01).

10. An optical system according to Claim 8, **characterized in that** the illumination device (06) has a diffuser (38) on its light-emergence side facing the surface (02) of the material (03).

11. An optical system according to Claim 8, **characterized in that** the illumination device (06) has at least one reflector module (39).

12. An optical system according to Claim 8, **characterized in that** each module (M61 to M65) has at least one reflector module (39).

13. An optical system according to Claim 8, **characterized in that** the at least one light source (07) of each module (M61 to M65) feeds its light into the reflector module (39) in each case.

14. An optical system according to Claim 9 and 10, **characterized in that** the reflector module (39) forms the diffuser (38) and the mirror (11; 16) in a single component.

15. An optical system according to Claim 8, **characterized in that** each module (M61 to M65) has at least one group of a plurality of light sources (07).

16. An optical system according to Claim 8, **characterized in that** all the light sources (07) of the same group feed their light into the same reflector module (39) in each case.

17. An optical system according to Claim 8, **characterized in that** each module (M61 to M65) has a control device (23) for controlling the at least one light source (07) of each module (M61 to M65).

18. An optical system according to Claim 2 or 8, **characterized in that** a separation joint (26) between two adjacent modules (M61 to M65) is arranged obliquely with respect to the length (L01) of the illumination strip (01).

19. An optical system according to Claim 2 or 8, **characterized in that** the modules (M61 to M65) of the illumination device (06) are designed so as to have the same function.

20. An optical system according to Claim 1 or 8, **characterized in that** the light sources (07) are arranged on a board (21) cooled by a coolant.

21. An optical system according to Claim 1 or 8, **characterized in that** the light sources (07) and their respective current source (22) are arranged on the same board (21).

22. An optical system according to Claim 1, 11 or 12, **characterized in that** the reflector module (39) is arranged on the board (21) carrying the light sources (07) or on the support (27).

23. An optical system according to Claim 1 or 10, **characterized in that** the diffuser (38) on the light-emergence face of the reflector module (39) is constructed in the form of a corrugated structure.

24. An optical system according to Claim 23, **characterized in that** the corrugated structure of the diffuser (38) is formed integrally on the light-emergence face of the reflector module (39).

25. An optical system according to Claim 1, 11 or 12, **characterized in that** the reflector module (39) has a depression extending in the longitudinal direction of the illumination device (06).

26. An optical system according to Claim 25, **characterized in that** the depression divides the light-emergence face of the reflector module (39) into two partial areas, wherein at least one of the said partial areas of the light-emergence face of the reflector module (39) is constructed in turn in the form of a lens.

27. An optical system according to Claim 26, **characterized in that** the two partial areas of the light-emergence face of the reflector module (39) are made equal in width.

28. An optical system according to Claim 26, **characterized in that** the partial area of the light-emergence face of the reflector module (39) constructed in the form of a lens is constructed in the form of a convex lens.

29. An optical system according to Claim 26, **characterized in that** at least one of the said partial areas of the light-emergence face of the reflector module (39) bundles the light current emerging at the light-emergence face of the reflector module (39) in the direction of the illumination strip (01) to be formed on the surface (02) of the material (03).

30. An optical system according to Claim 1 or 9, **characterized in that** the reflector module (39) is constructed in the form of a solid moulded part, wherein in the moulded part an optically relevant boundary face does not divide the diffuser (38) from the at least one mirror (11; 16).

31. An optical system according to Claim 1 or 10, **characterized in that** the diffuser (38) is constructed in the form of a lenticular lens or in the form of a prism foil.

32. An optical system according to Claim 1, 11 or 12, **characterized in that** the light sources (07) are arranged on the side of the reflector module (39) diametrically opposite the light-emergence side.

33. An optical system according to Claim 1, 11 or 12, **characterized in that** the light sources (07) are recessed into the reflector module (39) on the side of the reflector module (39) diametrically opposite the light-emergence side.

34. An optical system according to Claim 1, 11 or 12, **characterized in that** the reflector module (39) is produced from plastics material.

35. An optical system according to Claim 1, 11 or 12, **characterized in that** the reflector module (39) is produced from a transparent plastics material.

36. An optical system according to Claim 1, 11 or 12, **characterized in that** the reflector module (39) is produced by injection moulding.

37. An optical system according to Claim 1, 11 or 12, **characterized in that** the reflector module (39) is built up in the longitudinal direction of the illumination device (06) from a plurality of segments arranged in a row adjacent to one another, wherein each segment shapes the light-beam path fed into the reflector module (39) by one of the light sources (07).

38. An optical system according to Claim 1, 11 or 12, **characterized in that** the reflector module (39) shapes and homogenizes the light emitted by the light sources (07) with respect to the illumination strip (01).

39. An optical system according to Claim 8, **characterized in that** the illumination device (06) forms the illumination strip (01) with a width (B01) extending on the surface (02) of the material (03) at a right angle to its length (L01).

40. An optical system according to Claim 1 or 8, **characterized in that** the illumination strip (01) is arranged outside a focal point - situated in the beam path - of the light emitted by the light sources (07).

41. An optical system according to Claim 1 or 9, **characterized in that** the mirror (11) has at least one effective area (12) directed longitudinally with respect to the length (L01) and/or with respect to the width (B01) of the illumination strip (01).

42. An optical system according to Claim 41, **characterized in that** the mirror (11) with its effective area (12) restricts the light emitted by at least one of the light sources (07) of the illumination device (06) into a solid angle (ω) to a smaller first enveloping surface (AH1) than the spherical surface (AK) associated with the solid angle (ω).

43. An optical system according to Claim 1 or 9, **characterized in that** a further mirror (16) with at least one effective area (17) is arranged in a central region (14) surrounding the path of the central beam (13) inside the solid angle (ω) of the light emitted by at least one of the light sources (07) of the illumination device (06).

44. An optical system according to Claim 43, **characterized in that** the effective area (17) of the further mirror (16) deflects the light emitted by at least one of the light sources (07) of the illumination device (06) first towards at least one effective area (12) of the first mirror (11) directed longitudinally with respect to the length (L01) and/or with respect to the width (B01) of the illumination strip (01) and then with the effective area (12) of the first mirror (11) towards the illumination strip (01).

45. An optical system according to Claim 1 or 8, **characterized in that** at least one lens (18) is arranged in a central region (14) surrounding the path of the central beam (13) inside the solid angle (ω) of the light emitted by at least one of the light sources (07) of the illumination device (06).

46. An optical system according to Claim 45, **characterized in that** the lens (18) bundles at least part of the light emitted by at least one of the light sources (07) into the solid angle (ω) and not deflected by the effective area (12) of the first mirror (11) onto the illumination strip (01).

47. An optical system according to Claim 8, **characterized in that** the radiation emitted by the light source (07) is bundled to a greater degree longitudinally with respect to the length (L01) of the illumination strip (01) than the radiation longitudinally with respect to the width (B01) thereof.

48. An optical system according to Claim 1, 9 or 45, **characterized in that** the arrangement of the mirrors (11; 16) and/or the lens (18) are formed in an integrative manner in the reflector module (39).

49. An optical system according to Claim 42, **characterized in that** the solid angle (ω) covers an area (AK) cut out of a sphere as far as the size of a hemisphere.

50. An optical system according to Claim 1 or 9, **characterized in that** the at least one effective area (12) of the first mirror (11) directed longitudinally with respect to the length (L01) of the illumination strip (01) restricts the light - emitted into the solid angle (ω) - of at least one of the light sources (07) of the illumination device (06) to a greater degree onto a smaller second enveloping surface (AH2) than the at least one effective area (12) of the first mirror (11) directed longitudinally with respect to the width (B01) of the illumination strip (01).

51. An optical system according to Claim 1 or 8, **characterized in that** at least one light source (07) of the illumination device (06) has a first mirror (11) with at least two effective areas (12) which are symmetrical with respect to a central beam (13) emitted by the light source (07).

52. An optical system according to Claim 1 or 9, **characterized in that** the effective area (12) of the first mirror (11) is made plane or concave.

53. An optical system according to Claim 43, **characterized in that** the effective area (17) of the second mirror (16) is made plane or concave.

54. An optical system according to Claim 1 or 9, **characterized in that** on each individual light source (07) of the illumination device (06) a first mirror (11) with at least one effective area (12) is provided in each case at least longitudinally with respect to the width (B01) of the illumination strip (01).

55. An optical system according to Claim 45, **characterized in that** the lens (18) is constructed in the form of a biconvex lens (18).

56. An optical system according to Claim 45, **characterized in that** a distance (A18) is present between the light source (07) and a centre (Z18) of the lens (18), wherein the distance (A18) is smaller than half the distance (A07) between the light source (07) and the surface (02) of the material (03).

57. An optical system according to Claim 45, **characterized in that** the lens (18) is designed to be not rotationally symmetrical.

58. An optical system according to Claim 42, **characterized in that** the respective solid angles (ω) or at least the enveloping surfaces (AH1; AH2) of the light emitted by at least two adjacent light sources (07) of the illumination device (06) are superimposed at least in a partial area (19) illuminating the illumination strip (01).

59. An optical system according to Claim 42, **characterized in that** the respective solid angles (ω) or at least the enveloping surfaces (AH1; AH2) of the light emitted by at least two adjacent light sources (07) arranged in two adjacent modules (M61 to M65) are superimposed at least in their partial area (19) illuminating the illumination strip (01).

60. An optical system according to Claim 1 or 8, **characterized in that** all the light sources (07) of the illumination device (06) are designed in a similar manner.

61. An optical system according to Claim 1 or 8, **characterized in that** the light sources (07) of the illumination device (06) are constructed in the form of luminous diodes (07) or in the form of laser diodes (07).

62. An optical system according to Claim 1 or 8, **characterized in that** the light sources (07) of the illumination device (06) emit monochrome light.

63. An optical system according to Claim 1 or 8, **characterized in that** the direction of movement (04) of the material (03) is linear.

64. An optical system according to Claim 1 or 15, **characterized in that** the light sources (07) are arranged in the form of a line.

65. An optical system according to Claim 64, **characterized in that** the light sources (07) of the illumination device (06) which are arranged in the form of a line are arranged parallel to the length (L01) of the illumination strip (01).

66. An optical system according to Claim 1 or 8, **characterized in that** the direction of movement (04) of the material (03) is directed substantially parallel to the width (B01) of the illumination strip (01).

67. An optical system according to Claim 1 or 8, **characterized in that** the material (03) at least in the region of the illumination strip (01) is not curved.

68. An optical system according to Claim 1 or 8, **characterized in that** the material (03) is made planar.

69. An optical system according to Claim 1 or 8, **characterized in that** the material (03) is made flat.

70. An optical system according to Claim 1 or 8, **characterized in that** the material (03) is designed in the form of a curve (03).

71. An optical system according to Claim 1 or 8, **characterized in that** the material (03) is designed in the form of a web of material (03).

72. An optical system according to Claim 1 or 8, **characterized in that** the material (03) is designed in the form of a material to be printed (03).

73. An optical system according to Claim 1 or 8, **characterized in that** the material (03) consists of paper.

74. An optical system according to Claim 1 or 8, **characterized in that** the material (03) is designed in the form of a security paper (03) or in the form of a banknote (03).

75. An optical system according to Claim 1 or 8, **characterized in that** the surface (02) of the material (03) has a relief or another structure projecting out of the surface (02) or impressed into the surface (02) in the form of a depression.

76. An optical system according to Claim 1 or 8, **characterized in that** the width (B01) of the illumination strip (01) amounts to at least 3 mm.

77. An optical system according to Claim 1 or 8, **characterized in that** the width (B01) of the illumination strip (01) amounts to at least 8 mm.

78. An optical system according to Claim 1 or 8, **characterized in that** the distance (A07) from the surface (02) of the material (03) to the light sources (07) amounts to between 30 mm and 200 mm in each case.

79. An optical system according to Claim 1 or 8, **characterized in that** the distance (A07) from the surface (02) of the material (03) to the light sources (07) amounts to between 70 mm and 140 mm in each case.

80. An optical system according to Claim 1 or 8, **characterized in that** the distance (A07) to the light sources (07) is perpendicular to the surface (02) of the material (03).

81. An optical system according to Claim 1 or 8, **characterized in that** a detection device (08) with at least one detector (09) arranged at a distance (A09) from the surface (02) of the material (03) detects light emitted by the light sources (07).

82. An optical system according to Claim 1 or 8, **characterized in that** a detection device (08) with at least one detector (09) arranged at a distance (A09) from the surface (02) of the material (03) detects light remitted by the surface (02) of the material (03).

83. An optical system according to Claim 81 or 82, **characterized in that** the detection device (08) has a plurality of detectors (09) arranged one after the other in the direction of movement (04) of the material (03).

84. An optical system according to Claim 81 or 82, **characterized in that** the detection device (08) has detectors (09) arranged in the form of a line.

85. An optical system according to Claim 83, **characterized in that** the detectors (09) of the detection device (08) which are arranged in the form of a line are arranged parallel to the length (L01) of the illumination strip (01).

86. An optical system according to Claim 81 or 82, **characterized in that** the detection device (08) has spatial detection angle (α), wherein the detection angle (α) forms a cross-sectional area on the surface (02) of the material (03).

87. An optical system according to Claim 86, **characterized in that** with its cross-sectional area situated in the detection angle (α) the detection device (08) detects at least part of the bundle of light rays emitted by the illumination device (06) over the width (B01) of the illumination strip (01).

88. An optical system according to Claim 81 or 82, **characterized in that** the detection device (08) is constructed in the form of a camera (08).

89. An optical system according to Claim 81 or 82, **characterized in that** the detection device (08) is constructed in the form of a line camera (08).

90. An optical system according to Claim 81 or 82, **characterized in that** the detector (09) of the detection device (08) is constructed in the form of a CCD array (09) or in the form of a group of photodiodes (09).

91. An optical system according to Claim 81 or 82, **characterized in that** the detector (09) of the detection device (08) converts the remitted light detected into an electrical signal.

92. An optical system according to Claim 91, **characterized in that** the detector (09) of the detection device (08) supplies the electrical signal to an image-processing device (24).

93. An optical system according to Claim 1 or 8, **characterized in that** it is arranged in a printing press.

94. An optical system according to Claim 1 or 8, **characterized in that** it is arranged in a rotary printing press.

95. An optical system according to Claim 1 or 8, **characterized in that** it is arranged in a printing press which prints in an offset printing process or in a steel-engraving process or in a screen-printing process or in a hot-pressing process.

96. An optical system according to Claim 1 or 8, **characterized in that** it is arranged in a machine which further processes a printed product.

97. An optical system according to Claim 1 or 8, **characterized in that** it is constructed in the form of an in-line inspection system.

98. An optical system for producing an illumination strip (01) on a surface (02) of a material (03), wherein an illumination device (06) with its light sources (07) is arranged at a distance (A07) from the surface (02) of the material (03), wherein a plurality of light sources (07) of the illumination device (06) are arranged in the longitudinal direction of the said illumination device (06), wherein the illumination device (06) with its light-emitting light sources (07) produces the illumination strip (01) on the surface (02) of the material (03) which is moved relative to the illumination device (06), **characterized in that** a control device (23) connected to the illumination device (06) controls at least one of the light sources (07) arranged in the longitudinal direction of the illumination device (06) individually and in a manner independent of at least one other light source (07) arranged in the longitudinal direction of the illumination device (06).

99. An optical system according to Claim 98, **characterized in that** the control device (23) connected to the illumination device (06) selectively activates the light sources (07) arranged in the longitudinal direction of the illumination device (06).

100. An optical system according to Claim 98, **characterized in that** the control device (23) connected to the illumination device (06) and having the light sources (07) arranged in the longitudinal direction of the illumination device (06) adapts the length (L01) of the illumination strip (01) to the width (B03) of the material (03) to be illuminated.

101. An optical system according to Claim 98, **characterized in that** the control device (23) connected to the illumination device (06) and having the light sources (07) arranged in the longitudinal direction of the illumination device (06) illuminates areas selected on the surface (02) of the material (03) in the longitudinal direction of the illumination device (06).

102. An optical system according to Claim 101, **characterized in that** the areas illuminated on the surface (02) of the material (03) in the longitudinal direction of the illumination device (06) are interrupted by areas not illuminated or areas illuminated in a different colour.

103. An optical system according to Claim 98, **characterized in that** the light sources (07) arranged in the longitudinal direction of the illumination device (06) are divided into groups.

104. An optical system according to Claim 98, **characterized in that** the illumination device (06) has a plurality of modules (M61 to M65) arranged in a row adjacent to one another in its longitudinal direction.

105. An optical system according to Claim 98, **characterized in that** the light sources (07) feed their light into a reflector module (39) in each case, wherein the reflector module (39) forms the diffuser (38) and the mirror (11; 16) in a single component.

106. An optical system according to Claim 104, **characterized in that** each module (M61 to M65) has at least one light source (07) or at least one group of light sources (07) in each case.

107. An optical system according to Claim 105, **characterized in that** at least one module (M61 to M65) has at least one reflector module (39).

## Revendications

1. Système optique pour produire une bande d'éclairage (01) sur une surface (02) d'un matériau (03), sachant qu'un dispositif d'éclairement (06) comprenant plusieurs sources lumineuses (07) est disposé à une distance (A07) de la surface (02) du matériau (03), le dispositif d'éclairement (03) produisant la bande d'éclairement (01) avec ses sources lumineuses (07) émettant de la lumière sur la surface (02) du matériau (03) déplacé par rapport au dispositif d'éclairement (06), où le dispositif d'éclairement (06) présente un miroir (11 ; 16) focalisant sur la bande d'éclairement (01) la lumière émise par les sources lumineuses (07) et présente, sur sa face de sortie de lumière tournée vers la surface (02) du matériau (03), un corps diffusant (38), où le dispositif d'éclairement (06) présente au moins un module de réflecteur (39) présentant le corps diffusant (38) et le miroir (11 ; 16), les sources lumineuses (07) injectant leur lumière dans le module de réflecteur (39), **caractérisé en ce que** le rayonnement émis par la source lumineuse (07) est focalisé dans la direction de la longueur (L01) de la bande d'éclairement (01) plus fortement que le rayonnement est focalisé dans la direction de sa largeur (B01).

2. Système optique selon la revendication 1, **caractérisé en ce que** le dispositif d'éclairement (06) est composé de plusieurs modules (M61 à M65) alignés en rangées les uns les autres, chacun comprenant plusieurs sources lumineuses (07) disposées les unes à côté des autres.

3. Système optique selon la revendication 2, **caractérisé en ce que** plusieurs des modules (M61 à M65) alignés en rangées les uns les autres présentent au moins un module de réflecteur (39).

4. Système optique selon la revendication 1, **caractérisé en ce que** les sources lumineuses (07) sont subdivisées en groupes.

5. Système optique selon la revendication 4, **caractérisé en ce qu'**un dispositif de commande (23) est prévu, le dispositif de commande (23) commandant un groupe de sources lumineuses (07), indépendamment d'au moins un autre groupe de sources lumineuses (07).

6. Système optique selon la revendication 2, **caractérisé en ce qu'**une longueur de cellule, correspondant à une largeur (B03) du matériau (03) à éclairer, du dispositif d'éclairement (06), composé de plusieurs modules (M61 à M65) alignés en rangées les uns les autres, est activable par branchement en circuit des sources lumineuses (07) des modules (M61 à M65) concernés.

7. Système optique selon la revendication 2, **caractérisé en ce qu'**une longueur de cellule, correspondant à la longueur (L01) de la bande d'éclairement (01), du dispositif d'éclairement (06), composé de plusieurs modules (M61 à M65) alignés en rangées les uns les autres, est activable par branchement en circuit des sources lumineuses (07) des modules (M61 à M65) concernés.

8. Système optique pour produire une bande d'éclairement (01) sur une surface (02) d'un matériau (03), sachant qu'un dispositif d'éclairement (06) comprenant plusieurs sources lumineuses (07) est disposé à une distance (A07) de la surface (02) du matériau (03), le dispositif d'éclairement (03) produisant la bande d'éclairement (01) avec ses sources lumineuses (07) émettant de la lumière sur la surface (02) du matériau (03) déplacé par rapport au dispositif d'éclairement (06), le dispositif d'éclairement (06) étant composé d'une pluralité de modules (M61 à M65) alignés en rangées les uns les autres dans leur direction longitudinale, chaque module (M61 à M65) présentant chacun au moins une source lumineuse (07), **caractérisé en ce qu'**un dispositif de commande (23) relié au dispositif d'éclairement (06) commande la chaque fois au moins une source lumineuse (07) d'au moins deux modules (M61 à M65) différents, indépendamment de la au moins une source lumineuse (07) de chaque fois l'autre module (M61 à M65).

9. Système optique selon la revendication 8, **caractérisé en ce que** le dispositif d'éclairement (06) présente un miroir (11 ; 16) focalisant sur la bande d'éclairement (01) la lumière émise par la au moins une source lumineuse (07).

10. Système optique selon la revendication 8, **caractérisé en ce que** le dispositif d'éclairement (06) présente, sur sa face de sortie de lumière tournée vers la surface (02) du matériau (03), un corps de diffusion (38).

11. Système optique selon la revendication 8, **caractérisé en ce que** le dispositif d'éclairement (06) présente au moins un module de réflecteur (39).

12. Système optique selon la revendication 8, **caractérisé en ce que** chaque module (M61 à M65) présente au moins un module de réflecteur (39).

13. Système optique selon la revendication 8, **caractérisé en ce que** la au moins une source lumineuse (07) de chaque module (M61 à M65) injecte sa lumière chaque fois dans le module de réflecteur (39).

14. Système optique selon les revendications 9 et 10, **caractérisé en ce que** le module de réflecteur (39) constitue le corps de diffusion (38) et le miroir (11 ; 16) en un composant unique.

15. Système optique selon la revendication 8, **caractérisé en ce que** chaque module (M61 à M65) présente au moins un groupe de plusieurs sources lumineuses (07).

16. Système optique selon la revendication 8, **caractérisé en ce que** toutes les sources lumineuses (07) du même groupe injectent leur lumière chaque fois dans le même module de réflecteur (39).

17. Système optique selon la revendication 8, **caractérisé en ce que** chaque module (M61 à M65) présente un dispositif de commande (23) pour la commande de la au moins une source lumineuse (07) de chaque module (M61 à M65).

18. Système optique selon la revendication 2 ou 8, **caractérisé en ce qu'**un joint de séparation (26) est disposé entre deux modules (M61 à M65) voisins, obliquement par rapport à la longueur (L01) de la bande d'éclairement (01).

19. Système optique selon la revendication 2 ou 8, **caractérisé en ce que** les modules (M61 à M65) du dispositif d'éclairement (06) sont d'une fonctionnalité identique.

20. Système optique selon la revendication 1 ou 8, **caractérisé en ce que** les sources lumineuses (07) sont disposées sur une platine (21) refroidie par un fluide de refroidissement.

21. Système optique selon la revendication 1 ou 8, **caractérisé en ce que** les sources lumineuses (07) et leur source de courant (22) respective sont disposées sur la même platine (21).

22. Système optique selon la revendication 1, 11 ou 12, **caractérisé en ce que** le module de réflecteur (39) est disposé sur la platine (21) portant les sources lumineuses (07), ou sur le support (37).

23. Système optique selon la revendication 1 ou 10, **caractérisé en ce que** le corps de diffusion (38) est réalisé sous forme d'une structure rainurée, sur la surface de sortie de lumière du module de réflecteur (39).

24. Système optique selon la revendication 23, **caractérisé en ce que** la structure rainurée du corps de diffusion (38) est formée d'un seul tenant sur la face de sortie de lumière du module de réflecteur (39).

25. Système optique selon la revendication 1, 11 ou 12, **caractérisé en ce que** le module de réflecteur (39) présente une cavité s'étendant dans la direction longitudinale du dispositif d'éclairement (06).

26. Système optique selon la revendication 25, **caractérisé en ce que** la cavité divise la surface de sortie de lumière du module de réflecteur (39) en deux zones partielles, au moins l'une de ces zones partielles de la surface de sortie de lumière du module de réflecteur (39) de son côté étant réalisée sous la forme d'une lentille.

27. Système optique selon la revendication 26, **caractérisé en ce que** les deux zones partielles de la surface de sortie de lumière du module de réflecteur (39) sont de largeur identique.

28. Système optique selon la revendication 26, **caractérisé en ce que** la zone partielle, réalisée sous la forme d'une lentille, de la surface de sortie de lumière du module de réflecteur (39) est réalisée sous la forme d'une lentille convexe.

29. Système optique selon la revendication 26, **caractérisé en ce qu'**au moins l'une de ces zones partielles de la surface de sortie de lumière du module de réflecteur (39) focalise le flux lumineux sortant sur la surface de sortie de lumière du module de réflecteur (39), en direction de la bande d'éclairement (01) réalisée sur la surface (02) du matériau (03).

30. Système optique selon la revendication 1 ou 9, **caractérisé en ce que** le module de réflecteur (39) est réalisé sous forme de pièce profilée massive, sachant que, dans la pièce de forme, aucune surface limite présentant une importance optique n'assure une séparation du corps de diffusion (38) vis-à-vis du au moins un miroir (11 ; 16).

31. Système optique selon la revendication 1 ou 10, **caractérisé en ce que** le corps de diffusion (38) est réalisé sous la forme d'un lenticulaire ou d'une feuille à prismes.

32. Système optique selon la revendication 1, 11 ou 12, **caractérisé en ce que** les sources lumineuses (07) sont disposées sur la face du module de réflecteur (39) qui est diamétralement opposée à la face de sortie de la lumière.

33. Système optique selon la revendication 1, 11 ou 12, **caractérisé en ce que** les sources lumineuses (07) sont creusées dans le module de réflecteur (39), sur le côté du module de réflecteur (39) qui est diamétralement opposé au côté de sortie de la lumière.

34. Système optique selon la revendication 1, 11 ou 12, **caractérisé en ce que** le module de réflecteur (39) est fabriqué en une matière synthétique.

35. Système optique selon la revendication 1, 11 ou 12, **caractérisé en ce que** le module de réflecteur (39) est fabriqué à partir d'une matière synthétique transparente.

36. Système optique selon la revendication 1, 11 ou 12, **caractérisé en ce que** le module de réflecteur (39) est fabriqué suivant une technique de moulage par injection.

37. Système optique selon la revendication 1, 11 ou 12, **caractérisé en ce que** le module de réflecteur (39) est composé, en direction longitudinale du dispositif d'éclairement (06), d'une pluralité de segments alignés en rangées les uns les autres, chaque segment formant le trajet des rayons lumineux, injectés dans le module de réflecteur (39) par l'une des sources lumineuses (07).

38. Système optique selon la revendication 1, 11 ou 12, **caractérisé en ce que** le module de réflecteur (39) forme et homogénéise la lumière émise par les sources lumineuses (07), du point de vue de la bande d'éclairement (01).

39. Système optique selon la revendication 8, **caractérisé en ce que** le dispositif d'éclairement (06) constitue la bande d'éclairement (01) avec une largeur (B01) s'étendant sur la surface (02) du matériau (03), perpendiculairement à sa longueur (L01).

40. Système optique selon la revendication 1 ou 8, **caractérisé en ce que** la bande d'éclairement (01) est disposée à l'extérieur d'un foyer, situé dans le trajet des rayons, de la lumière émise par les sources lumineuses (07).

41. Système optique selon la revendication 1 ou 9, **caractérisé en ce que** le miroir (11) présente au moins une face active (12), orientée dans la direction de la longueur (L01) et/ou de la largeur (B01) de la bande d'éclairement (01).

42. Système optique selon la revendication 41, **caractérisé en ce que** le miroir (11), avec sa face active (12), limite la lumière, émise par au moins l'une des sources lumineuses (07) du dispositif d'éclairement (06) dans un angle solide (ω), à une première plus petite surface d'enveloppe (AH1) que la surface sphérique (AK) appartenant à l'angle solide (ω).

43. Système optique selon la revendication 1 ou 9, **caractérisé en ce qu'**un autre miroir (16), ayant au moins une surface active (17), est disposé dans une zone centrale (14), entourant le trajet des rayons suivi par le rayon central (13), à l'intérieur de l'angle solide (ω) de la lumière émise par au moins l'une des sources lumineuses (07) du dispositif d'éclairement (06).

44. Système optique selon la revendication 43, **caractérisé en ce que** la surface active (17) de l'autre miroir (16) dévie la lumière, émise par au moins l'une des sources lumineuses (07) du dispositif d'éclairement (06), d'abord vers au moins une face active (12), orientée dans la direction de la longueur (L01) et/ou de la largeur (B01) de la bande d'éclairement (01) du premier miroir (11) et, ensuite, avec la face active (12) du premier miroir (11), vers la bande d'éclairement (01).

45. Système optique selon la revendication 1 ou 8, **caractérisé en ce qu'**au moins une lentille (18) est disposée dans une zone centrale (14) entourant le trajet des rayons suivi par le rayon central (13), à l'intérieur de l'angle solide (ω) de la lumière émise par au moins l'une des sources lumineuses (07) du dispositif d'éclairement (06).

46. Système optique selon la revendication 45, **caractérisé en ce que** la lentille (18) focalise au moins une partie de la lumière, non déviée sur la bande d'éclairement (01) par la surface active (12) du premier miroir (11) et émise par au moins l'une des sources lumineuses (07) dans l'angle solide (ω).

47. Système optique selon la revendication 8, **caractérisé en ce que** le rayonnement émis par la source lumineuse (07) est focalisé dans la direction longitudinale (L01) de la bande d'éclairement (01) plus fortement que le rayonnement dans la direction de sa largeur (B01).

48. Système optique selon la revendication 1, 9 ou 45, **caractérisé en ce que** l'agencement des miroirs (11 ; 16) et/ou la lentille (18) sont réalisés de façon intégrative dans le module de réflecteur (39).

49. Système optique selon la revendication 42, **caractérisé en ce que** l'angle solide (ω) couvre une surface (AK), découpée d'une sphère, jusqu'à la taille d'une demi-sphère.

50. Système optique selon la revendication 1 ou 9, **caractérisé en ce que** la au moins une face active (12), orientée dans la direction de la longueur (L01) de la bande d'éclairement (01), du premier miroir (11) limite la lumière, émise dans l'angle solide (ω) par au moins l'une des sources lumineuses (07) du dispositif d'éclairement (06) sur une plus petite deuxième surface d'enveloppe (AH2), plus fortement que la au moins une face active (12), tournée dans la largeur (B01) de la bande d'éclairement (01), du premier miroir (11).

51. Système optique selon la revendication 1 ou 8, **caractérisé en ce qu'**au moins une source lumineuse (07) du dispositif d'éclairement (06) présente un premier miroir (11), avec au moins deux faces actives (12) symétriques par rapport à un rayon central (13) ayant été émis par la source lumineuse (07).

52. Système optique selon la revendication 1 ou 9, **caractérisé en ce que** la surface active (12) du premier miroir (11) est plane ou concave.

53. Système optique selon la revendication 43, **caractérisé en ce que** la face active (17) du deuxième miroir (16) est plane ou concave.

54. Système optique selon la revendication 1 ou 9, **caractérisé en ce que**, sur chaque source lumineuse (07) individuelle du dispositif d'éclairement (06), chaque fois un premier miroir (11) est prévu, avec au moins une face active (12) au moins dans la direction de la largeur (B01) de la bande d'éclairement (01).

55. Système optique selon la revendication 45, **caractérisé en ce que** la lentille (18) est réalisée sous la forme de lentille (18) biconvexe.

56. Système optique selon la revendication 45, **caractérisé en ce que**, entre la source lumineuse (07) et un centre (Z18) de la lentille (18), est prévu un espacement (A18), l'espacement (A18) étant inférieur à la moitié de l'espacement (A07), entre la source lumineuse (07) et la surface (02) du matériau (03).

57. Système optique selon la revendication 45, **caractérisé en ce que** la lentille (18) est réalisée sans répondre à une symétrie de rotation.

58. Système optique selon la revendication 42, **caractérisé en ce que** l'angle solide (ω) respectif, ou au moins les surfaces d'enveloppe (AH1 ; AH2) de la lumière émise par au moins deux sources lumineuses (07) voisines du dispositif d'éclairement (06), se superposent au moins dans une zone partielle (19) éclairant la bande d'éclairement (01).

59. Système optique selon la revendication 42, **caractérisé en ce que** les angles solides (ω) respectifs, ou au moins les surfaces d'enveloppe (AH1 ; AH2) de la lumière, émise par au moins deux sources lumineuses (07) voisines disposées dans deux modules (M61 à M65) voisins, se superposent, au moins dans leur zone partielle (19) éclairant la bande d'éclairement (01).

60. Système optique selon la revendication 1 ou 8, **caractérisé en ce que** toutes les sources lumineuses (07) du dispositif d'éclairement (06) sont réalisées du même type.

61. Système optique selon la revendication 1 ou 8, **caractérisé en ce que** les sources lumineuses (07) du dispositif d'éclairement (06) sont réalisées sous la forme de diodes luminescentes (07) ou de diodes à laser (07).

62. Système optique selon la revendication 1 ou 8, **caractérisé en ce que** les sources lumineuses (07) du dispositif d'éclairement (06) émettent une lumière monochrome.

63. Système optique selon la revendication 1 ou 8, **caractérisé en ce que** la direction de déplacement (04) du matériau (03) est linéaire.

64. Système optique selon la revendication 1 ou 15, **caractérisé en ce que** les sources lumineuses (07) sont disposées en forme de cellules.

65. Système optique selon la revendication 64, **caractérisé en ce que** les sources lumineuses (07) disposées en forme de cellules du dispositif d'éclairement (06) sont disposées parallèlement à la longueur (L01) de la bande d'éclairement (01).

66. Système optique selon la revendication 1 ou 8, **caractérisé en ce que** la direction de déplacement (04) du matériau (03) est orientée sensiblement parallèlement à la largeur (B01) de la bande d'éclairement (01).

67. Système optique selon la revendication 1 ou 8, **caractérisé en ce que** le matériau (03) n'est pas incurvé, au moins dans la zone de la bande d'éclairement (01).

68. Système optique selon la revendication 1 ou 8, **caractérisé en ce que** le matériau (03) est d'une surface plane.

69. Système optique selon la revendication 1 ou 8, **caractérisé en ce que** le matériau (03) est plat.

70. Système optique selon la revendication 1 ou 8, **caractérisé en ce que** le matériau (03) est conformé en un arc (03).

71. Système optique selon la revendication 1 ou 8, **caractérisé en ce que** le matériau (03) est réalisé sous la forme d'une bande de matériau (03).

72. Système optique selon la revendication 1 ou 8, **caractérisé en ce que** le matériau (03) est réalisé sous la forme d'un produit imprimé (03).

73. Système optique selon la revendication 1 ou 8, **caractérisé en ce que** le matériau (03) est composé de papier.

74. Système optique selon la revendication 1 ou 8, **caractérisé en ce que** le matériau (03) est réalisé sous la forme de papier valeur (03), ou d'un billet de banque (03).

75. Système optique selon la revendication 1 ou 8, **caractérisé en ce que** la surface (02) du matériau (03) présente un relief ou une autre structure, ressortant de la surface (02) ou pénétrant dans la surface (02) sous la forme d'une cavité.

76. Système optique selon la revendication 1 ou 8, **caractérisé en ce que** la largeur (B01) de la bande d'éclairement (01) est d'au moins 3 mm.

77. Système optique selon la revendication 1 ou 8, **caractérisé en ce que** la largeur (B01) de la bande d'éclairement (01) est d'au moins 8 mm.

78. Système optique selon la revendication 1 ou 8, **caractérisé en ce que** l'espacement (A07) de la surface (02) du matériau (03), par rapport aux sources lumineuses (07), est chaque fois compris dans la fourchette entre 30 mm et 200 mm.

79. Système optique selon la revendication 1 ou 8, **caractérisé en ce que** l'espacement (A07) de la surface (02) du matériau (03) vis-à-vis des sources lumineuses (07) est chaque fois compris dans la fourchette entre 70 mm et 140 mm.

80. Système optique selon la revendication 1 ou 8, **caractérisé en ce que** l'espacement (A07), par rapport aux sources lumineuses (07), est mesuré perpendiculairement à la surface (02) du matériau (03).

81. Système optique selon la revendication 1 ou 8, **caractérisé en ce qu'**un dispositif de détection (08), équipé d'au moins un détecteur (09) disposé à une distance (A09) de la surface (02) du matériau (03), détecte de la lumière émise par les sources lumineuses (07).

82. Système optique selon la revendication 1 ou 8, **caractérisé en ce qu'**un dispositif de détection (08), muni d'au moins un détecteur (09) disposé à une distance (A09) de la surface (02) du matériau (03), détecte de la lumière réémise de la surface (02) du matériau (03).

83. Système optique selon la revendication 81 ou 82, **caractérisé en ce que** le dispositif de détection (08) présente plusieurs détecteurs (09), disposés les uns à la suite des autres dans la direction de déplacement (04) du matériau (03).

84. Système optique selon la revendication 81 ou 82, **caractérisé en ce que** le dispositif de détection (08) présente des détecteurs (09) disposés en forme de lignes.

85. Système optique selon la revendication 83, **caractérisé en ce que** des détecteurs (09), disposés en forme de lignes, du dispositif de détection (08) sont disposés parallèlement à la longueur (L01) de la bande d'éclairement (01).

86. Système optique selon la revendication 81 ou 82, **caractérisé en ce que** le dispositif de détection (08) présente un angle de détection solide (α), sachant que l'angle de détection (α) sur la surface (02) du matériau (03) constitue une surface de section transversale.

87. Système optique selon la revendication 86, **caractérisé en ce que** le dispositif de détection (08), avec sa surface de section transversale située dans l'angle de détection (α), appréhende au moins une partie du faisceau de rayons lumineux émis par le dispositif d'éclairement (06), sur la largeur (B01) de la bande d'éclairement (01).

88. Système optique selon la revendication 81 ou 82, **caractérisé en ce que** le dispositif de détection (08) est réalisé sous la forme d'une caméra (08).

89. Système optique selon la revendication 81 ou 82, **caractérisé en ce que** le dispositif de détection (08) est réalisé sous la forme d'une caméra à lignes (08).

90. Système optique selon la revendication 81 ou 82, **caractérisé en ce que** le détecteur (09) du dispositif de détection (08) est réalisé sous la forme de matrice d'éléments CCD (09), ou sous forme d'un groupe de photodiodes (09).

91. Système optique selon la revendication 81 ou 82, **caractérisé en ce que** le détecteur (09) du dispositif de détection (08) convertit la lumière réémise, détectée, en un signal électrique.

92. Système optique selon la revendication 91, **caractérisé en ce que** le détecteur (09) du dispositif de détection (08) amène le signal électrique à un dispositif de traitement d'images (24).

93. Système optique selon la revendication 1 ou 8, **caractérisé en ce qu'**il est disposé dans une machine à imprimer.

94. Système optique selon la revendication 1 ou 8, **caractérisé en ce qu'**il est disposé dans une machine à imprimer rotative.

95. Système optique selon la revendication 1 ou 8, **caractérisé en ce qu'**il est disposé dans une machine à imprimer, imprimant en un procédé d'impression offset, ou en un procédé d'impression à gravure sur acier, ou dans un procédé d'impression sérigraphique, ou dans un procédé de façonnage à chaud.

96. Système optique selon la revendication 1 ou 8, **caractérisé en ce qu'**il est disposé dans une machine retravaillant un produit imprimé.

97. Système optique selon la revendication 1 ou 8, **caractérisé en ce qu'**il est réalisé sous la forme de système d'inspection en ligne.

98. Système optique pour produire une bande d'éclairement (01) sur une surface (02) d'un matériau (03), où un dispositif d'éclairement (06) est disposé avec ses sources lumineuses (07) à une distance (A07) de la surface (02) du matériau (03), sachant que plusieurs sources lumineuses (07) du dispositif d'éclairement (06) sont disposées dans la direction longitudinale de ce dispositif d'éclairement (06), le dispositif d'éclairement (06), avec ses sources lumineuses (07) émettant de la lumière produisant la bande d'éclairement (01) sur la surface (02) du matériau (03) déplacé par rapport au dispositif d'éclairement (06), **caractérisé en ce qu'**un dispositif de commande (23) relié au dispositif d'éclairement (06) commande individuellement au moins l'une des sources lumineuses (07) disposées dans la direction longitudinale du dispositif d'éclairement (06) et indépendamment d'au moins une autre source lumineuse (07), disposée dans la direction longitudinale du dispositif d'éclairement (06).

99. Système optique selon la revendication 98, **caractérisé en ce que** le dispositif de commande (23) relié au dispositif d'éclairement (06) active au choix les sources lumineuses (07) disposées dans la direction longitudinale du dispositif d'éclairement (06).

100. Système optique selon la revendication 98, **caractérisé en ce que** le dispositif de commande (23) relié au dispositif d'éclairement (06), avec les sources lumineuses (07) disposées dans la direction longitudinale du dispositif d'éclairement (06), adapte la longueur (L01) de la bande d'éclairement (01) à la largeur (B03) du matériau (03) à éclairer.

101. Système optique selon la revendication 98, **caractérisé en ce que** le dispositif de commande (23) relié au dispositif d'éclairement (06), avec les sources lumineuses (07) disposées dans la direction longitudinale du dispositif d'éclairement (06), éclaire des zones sélectionnées dans la direction longitudinale du dispositif d'éclairement (06), sur la surface (02) du matériau (03).

102. Système optique selon la revendication 101, **caractérisé en ce que** les zones éclairées, sur la surface (02) du matériau (03), dans la direction longitudinale du dispositif d'éclairement (06), sont interrompues par des zones non éclairées, ou bien éclairées d'une autre couleur.

103. Système optique selon la revendication 98, **caractérisé en ce que** les sources lumineuses (07) disposées dans la direction longitudinale du dispositif d'éclairement (06) sont subdivisées en groupes.

104. Système optique selon la revendication 98, **caractérisé en ce que** le dispositif d'éclairement (06) présente plusieurs modules (M61 à M65), disposés en rangées les uns à côté des autres dans sa direction longitudinale.

105. Système optique selon la revendication 98, **caractérisé en ce que** les sources lumineuses (07) injectent leur lumière chaque fois dans un module de réflecteur (39), le module de réflecteur (39) constituant le corps de diffusion (38) et le miroir (11 ; 16) en un composant unique.

106. Système optique selon la revendication 104, **caractérisé en ce que** chaque module (M61 à M65) présente chaque fois au moins une source lumineuse (07), ou au moins un groupe de sources lumineuses (07).

107. Système optique selon la revendication 105, **caractérisé en ce qu'**au moins un module (M61 à M65) présente au moins un module de réflecteur (39).
